(19) Europäisches Patentamt
European Patent Office
Office européen des brevets

(11) Veröffentlichungsnummer: **0 258 349**
**B1**

(12) # EUROPÄISCHE PATENTSCHRIFT

(45) Veröffentlichungstag der Patentschrift: **23.05.90**

(51) Int. Cl.$^5$: **C 09 K 19/42**

(21) Anmeldenummer: **87901449.6**

(22) Anmeldetag: **17.02.87**

(86) Internationale Anmeldenummer:
**PCT/EP87/00091**

(87) Internationale Veröffentlichungsnummer:
**WO 87/05318 11.09.87 Gazette 87/20**

(54) **ELEKTROOPTISCHES ANZEIGEELEMENT.**

(30) Priorität: **01.03.86 DE 3606787**

(43) Veröffentlichungstag der Anmeldung:
**09.03.88 Patentblatt 88/10**

(45) Bekanntmachung des Hinweises auf die Patenterteilung:
**23.05.90 Patentblatt 90/21**

(84) Benannte Vertragsstaaten:
**CH DE FR GB LI**

(56) Entgegenhaltungen:
**EP-A-0 056 501**
**EP-A-0 103 681**
**EP-A-0 205 998**
**EP-A-01 679 12**
**WO-A-86/04081**
**US-A-4 522 470**

(73) Patentinhaber: **MERCK PATENT GESELLSCHAFT MIT BESCHRÄNKTER HAFTUNG**
**Frankfurter Strasse 250 Postfach 4119**
**D-6100 Darmstadt (DE)**

(72) Erfinder: **SCHEUBLE, Bernhard**
**Am Grenzweg 18**
**D-6146 Alsbach (DE)**
Erfinder: **HITTICH, Reinhard**
**Am Kirchberg 11**
**D-6101 Modautal (DE)**
Erfinder: **EIDENSCHINK, Rudolf**
**Kornblumenstr. 1**
**D-6115 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft elektrooptische Anzeigeelemente mit besonders geringer Temperaturabhängigkeit der Schewellenspannung.

Für FK-Anzeigeelemente werden die Eigenschaften nematischer oder nematisch-chlolesterischer flüssigkristalliner Materialien ausgenutzt, ihre optischen Eigenschaften wie Lichtabsorption, Lichtstreuung, Doppelbrechung, Reflexionsvermögen oder Farbe unter dem Einfluß elektrischer Felder zu verändern. Die Funktion derartiger Anzeigeelemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zelle, dem SBE-Effekt oder dem cholesterisch-nematischen Phasenübergang.

Für die technische Anwendung dieser Effekte in elektronischen Bauelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich, niedrige Viskosität, niedrige optische Anisotropie, geringe Temperaturabhängigkeit der Schwellenspannung, hohe Steilheit der elektrooptischen Kennlinie und ausreichendes Lösungsvermögen für pleochtroitische Farbstoffe gerfordert.

In keiner der bisher bekannten Reihen von Verbindungen mit flüssigkristalliner Mesophase gibt es eine Einzelverbindung, die allen diesen Erfordernissen entspricht.

Es werden daher in der Regel Mischungen von zwei bis 25, vorzugszweise drei bis 18, Verbindungen hergestellt, um als FK-Phasen verwendbare Substanzen zu erhalten. Optimale Phasen lassen sich jedoch auf diese Weise nicht leicht herstellen, da Komponenten mit hohen Schmelz- und Klärpunkten dem Gemischen häufig auch eine hohe Viskosität verleihen. Dadurch werden die Schaltzeiten der damit hergestellten elektrooptischen Anzeigeelemente in unerwünschter Weise verändert.

Zur Verminderung der Schwellenspannung werden in bisher bekannten FK-Phasen stark polare nematische Verbindungen mit terminaler Cyan-Gruppe zugesetzt. Das effektive Dipolmoment dieser Verbindungen wird jedoch durch eine mehr oder weniger starke antiparallele Assoziation dieser Moleküle deutlich vermindert, so daß relativ große Anteile polarer Verbindungen zugesetzt werden müssen. Hieraus resultieren wieder verschiedene Nachteile, wie unerwünschte Temperaturabhängigkeit der Schwellenspannung, ungünstige elastische Eigenschaften der FK-Phasen, hohe Viskosität. Beim Zusatz von p-Alkylbenzoesäure-4-cyan-3-fluorphenylestern als stark polare Komponenten zu ZLI—1957/5 (im Handel befindliche Mischung von E. Merck, Darmstadt, enthaltend Phenylcyclohexan-, Cyclohexylbiphenyl-, Bis-cyclohexylbiphenylverbindungen und Cyclohexylbenzoesäurephenylester) konnte gezeigt werden (Hp. Schad and S. M. Kelly, J. Chem. Phys. 81 (3), 1514—15 (1984)), daß die Schwewellenspannung vermindert wird, was durch einen reduzierten Assoziationsgrad der zugesetzten Verbindungen erklärt wird. Jedoch auch diese FK-Phasen genügen nicht gleichzeitig allen oben angegebenen Erfordernissen. Insbesondere weisen sie für viele Anwendungen nach wie vor eine zu hohe Temperaturabhängigkeit der Schwellenspannung und für manche Anwendungsbereiche nach wie vor zu hohe Schwellenspannungen auf und außerdem sind die Kennliniensteilheiten aufgrund des verhältnismäßig großen Verhältnisses der elastischen Konstanten für die Biegung ($K_3$) und die Spreizung ($K_1$) $K_3/K_1$ für hochinformative Displays nicht ausreichend. Die bisher bekannten Mischungen sind daher mit einer zu hohen Temperaturabhängigkeit der Schwellenspannung und ggf. mit einer zu hohen Schwellspannung und/oder einer zu schlechten Kennliniensteilheit (gekennzeichnet durch ein zu hohes $K_3/K_1$) behaftet. Ferner weisen bisher bekannte Mischungen mit niedriger Schwellenspannung zu hohe smektisch-nematische Übergangstemperaturen auf.

Es besteht somit immer noch ein großer Bedarf nach flüssigkristallinen Phasen mit hohen Klärpunkten, niederen Schmelzpunkten, niedriger Viskosität (und damit kurzen Schaltzeiten) und geringer Temperaturabhängigkeit der Schwellenspannung und gegebenenfalls niedriger Schwellenspannung und/oder günstigen elastischen Eigenschaften.

Der Erfindung liegt die Aufgabe zugrunde, FK-Anzeigeelemente bereitzustellen, die einen breiten Arbeitstemperaturbereich besitzen und die oben angegebenen Nachteile nicht oder nur in geringerem Maße aufweisen.

Es wurde gefunden, daß FK-Anzeigeelemente mit besonders günstigen elektrooptischen Eigenschaften, insbesondere mit außergewöhnlich geringer Temperaturabhängigkeit der Schwellenspannung erhalten werden, wenn sie eine Flüssigkristallphase enthalten mit mindestens einer Komponente (A) mit einem vermindern Assoziationsgrad, mindestens einer Komponente ausgewählt aus der Gruppe B, bestehend aus den Verbindungen der Formel I und II

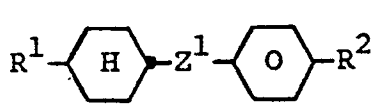

I

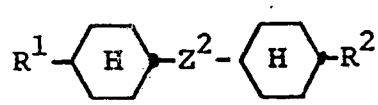

II

worin

$R^1$ und $R^2$ jeweils unabhängig voneinander Alkyl mit 1 bis 7 C-Atomen bedeuten, worin auch eine oder zwei nicht benachbarte $CH_2$-Gruppen durch —O—, —CO—, —O—CO—, —CO—O- und/oder —CH=CH-(trans) ersetzt sein können, und

$Z^1$ und $Z^2$ jeweils —CO—O—, —$CH_2O$—, —$CH_2CH_2$— oder eine Einfachbindung bedeutet, mindestens einer Komponente ausgewählt aus der Gruppe C bestehend aus den Verbindungen der Formel III bis VI

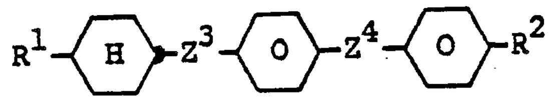
III

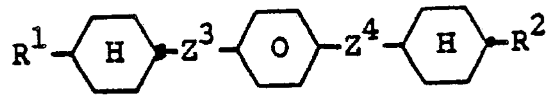
IV

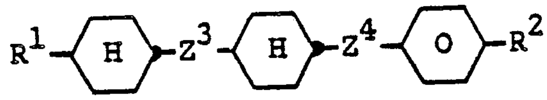
V

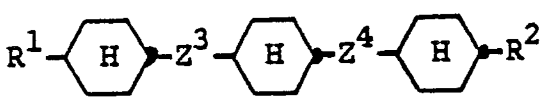
VI

worin

$R^1$ und $R^2$ jeweils unabhängig voneinander Alkyl mit 1 bis 7 C-Atomen bedeuten, worin auch eine oder zwei nicht benachbarte $CH_2$-Gruppen durch —O—, —CO—, —O—CO—, —CO—O- und/oder —CH=CH-(trans) ersetzt sein können, und

$Z^3$ und $Z^4$ jeweils unabhängig voneinander —CO—O—, —O—CO—, —$CH_2CH_2$— oder eine Einfachbindung bedeuten, und/oder mindestens eine Komponente ausgewählt aus der Gruppe D bestehend aus den Verbindungen der Formeln VII bis XI

$$R^1\text{-}A^1\text{-}Z^1\text{-}A^2\text{-}A^3\text{-}Z^3\text{-}A^4\text{-}R^2 \qquad \text{VII}$$

$$R^1\text{-}A^1\text{-}Z^1\text{-}A^2\text{-}Z^2\text{-}A^3\text{-}A^4\text{-}R^2 \qquad \text{VIII}$$

$$R^1\text{-}A^1\text{-}Z^1\text{-}A^2\text{-}A^3\text{-}A^4\text{-}R^2 \qquad \text{IX}$$

$$R^1\text{-}A^1\text{-}A^2\text{-}Z^2\text{-}A^3\text{-}A^4\text{-}R^2 \qquad \text{X}$$

$$R^1\text{-}A^1\text{-}A^2\text{-}A^3\text{-}A^4\text{-}R^2 \qquad \text{XI}$$

worin

$R^1$ und $R^2$ jeweils unabhängig voneinander Alkyl mit 1 bis 7 C-Atomen bedeuten, worin auch eine oder zwei nicht benachbarte $CH_2$-Gruppen durch —O—, —CO—, —O—CO—, —CO—O- und/oder —CH=CH-(trans) ersetzt sein können,

$A^1$, $A^2$, $A^3$ u. $A^4$ jeweils unabhängig voneinander trans-1,4-Cyclohexylen oder unsubstituiertes oder durch ein oder zwei F- oder Cl-Atome und/oder $CH_3$- oder CN-Gruppen substituiertes 1,4-Phenylen, und

$Z^1$, $Z^2$ und $Z^3$ jeweils unabhängig voneinander —CO—O—, —O—CO—, —$CH_2CH_2$—, —$CH_2O$—, —$OCH_2$— oder Einfachbindung bedeuten.

Unter Verbindungen mit verminderten Assoziationsgrad sollen hier solche Flüssigkristallverbindungen verstanden werden, die bei ähnlichem Gesamtdipolmoment des Moleküls (aus Vektor-Addition der Einzeldipolmomente der Strukturelemente) durch verminderte antiparallele Assoziation der Molekülverbindungen eine höhere dielektrische Anisotropie zeigen als beispielsweise Verbindungen wie 4-Alkyl-4'-cyanbiphenyle oder p-trans-4-Alkylcyclohexyl-benzonitrile.

Gegenstand der Erfindung ist somit ein FK-Anzeigeelement enthaltend eine oben beschriebene Flüssigkristallphase. Gegenstand der Erfindung sind ferner FK-Anzeigeelemente nach Anspruch 1, dadurch gekennzeichnet, daß das Dielektrikum mindestens eine Komponente der Formel (1) enthält

$$R—(Q^1—Z')_n—Q^2—Z''—Q^A \qquad (1)$$

worin

R Alkyl mit 2 bis 9 C-Atomen bedeutet, worin auch eine oder zwei nicht benachbarte $CH_2$-Gruppen durch —O—, —CO—, —O—CO—, —CO—O— und/oder —CH=CH (trans) ersetezt sein können,

Z′ und Z″ jeweils —CO—O—, O—CO—, —$CH_2CH_2$, $CH_2O$—, —$OCH_2$— oder eine Einfachbindung,

n 0, 1 oder 2,

$Q^1$ und $Q^2$ jeweils unabhängig voneinander trans-1,4-Cyclohexylen, worin auch eine oder zwei nicht benachbarte $CH_2$-Gruppen durch —O— und/oder —S— ersetzt sein können, oder 1,4-Phenylen, worin auch eine oder mehrere CH-Gruppen durch N ersetzt sein können, bedeutet, und

$Q^A$ 3-Halogen-4-Cyanphenyl, 3-Halogen-4-isothiocyanatophenyl, 3,4-Dihalogenphenyl, p-Nitrophenyl, trans-4-Nitrocyclohexyl, trans-4-Isothiocyanatocyclohexyl oder p-Isothiocyanatophenyl ist,

sowie FK-Anzeigeelemente, deren Dielektrikum zusätzlich mindestens eine Komponente einer der Formeln XII bis XVII und/oder mindestens eine Komponente der Formeln XVIII bis XXV enthält:

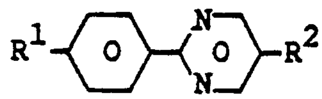
XII

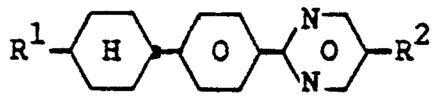
XIII

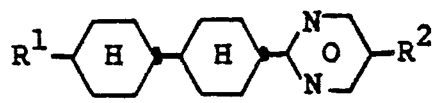
XIV

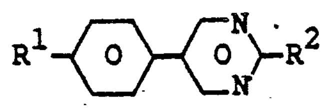
XV

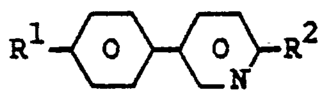
XVI

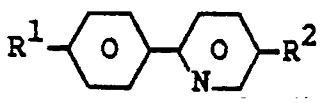
XVII

worin

$R^1$ und $R^2$ jeweils unabhängig voneinander Alkyl mit 1 bis 10 C-Atomen, worin auch eine oder zwei nicht benachbarte $CH_2$-Gruppen durch —O—, —CO—, —O—CO—, —CO—O- und/oder —CH=CH-(trans) ersetzt sein können, bedeuten

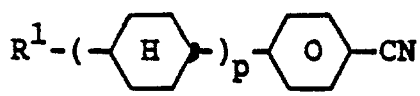
XVIII

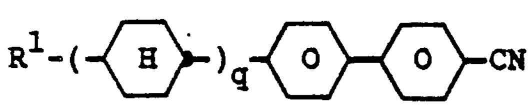
XIX

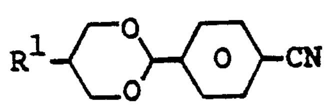
XX

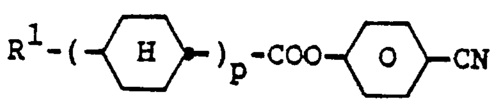
XXI

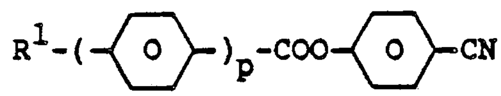

XXII

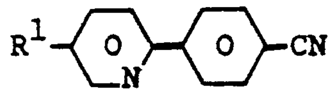

XXIII

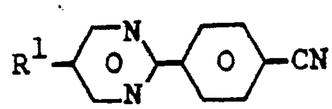

XXIV

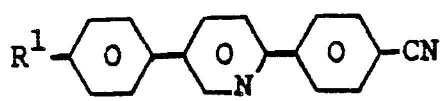

XXV

worin

$R^1$ Alkyl mit 1 bis 10 C-Atomen, worin auch eine oder zwei nicht benachbarte $CH_2$-Gruppen durch —O—, —CO—, —O—CO—, —CO—O— und/oder —CH=CH- (trans) ersetzt sein können, bedeutet, und

p 1 oder 2 und

q 0, 1 oder 2 ist.

Ferner ist Gegenstand der Erfindung ein FK-Anzeigeelement, das neben Komponenten ausgewählt aus der Gruppe A, B, C, D bzw. E weniger als 3% an Komponenten mit einer deutlich positiven dielektrischen Anisotropie ($\Delta\varepsilon > 5$) enthält.

Ferner sind Gegenstand der Erfindung Flüssigkristallanzeigeelemente, die als Dielektrikum ein Guest-Host-System enthaltend einen oder mehrere Farbstoffe und eine oben beschriebene FK-Phase enthalten.

Prinzipiell können als Farbstoffe alle für Guest-Host-Mischungen geeigneten pleochroitischen Farbstoffe verwendet werden. Die wichtigsten dieser Farbstoffe gehören den Klassen der Antrachinon-, Naphtochinon-, Azo-, Indigo- und/oder Perylen-Farbstoffe an.

Diese sind in reichre Vielfalt in der Literatur beschrieben. Der Fachmann kann sich die für den jeweiligen Anwendungszweck am besten geeigneten Farbstoffe ohne Schwierigkeiten heraussuchen. So sind z.B. Anthrachinonfarbstoffe beschrieben in EP 34 832, EP 44 893, EP 48 583, EP 54 217, EP 56 492, EP 59 036, GB 20 65 158, GB 20 65 695, GB 20 81 736, GB 20 82 196, GB 20 94 822, GB 20 94 825, JP—OS 55—123673, JP—OS 56—112 967, JP—OS 57—165 456, JP—OS 59—020 355, DE 30 17 877, DE 30 40 102, DE 30 48 552, DE 31 00 533, DE 31 15 147, DE 31 15 762, DE 31 50 803, DE 32 01 120 und DE 33 09 045, Naphthochinonfarbstoffe beschrieben in DE 31 26 108 und 32 02 761, Azofarbstoffe in EP 43 904, DE 31 23 519, DE 32 45 751, DE 33 09 048, PCT WO 82/2054, GB 20 79 770, JP—OS 56—57—850, JP—OS 56—104 984, JP—OS 55—052 375, JP—OS 59—096 171, JP—OS 59—093 776, US 4,308,161, US 4,308,162, US 4,340,973, T. Uchida, C. Shishido, H. Seki und M. Wada; Mol. Cryst. Liq. Cryst. *39*, 39—52 (1977) und H. Seki, C. Shishido, S. Yasui und T. Uchida: JPn. J. Appl. Phys. *21*, 191—192 (1982) und Perylene beschrieben in EP 60 895, EP 68 427 und PCT WO 82/1191.

Durch geeignete Wahl der Farbstoffkomponenten und der relativen Farbstoffkonzentrationen können die erfindungsgemäßen Guest-Host-Systeme den verschiedensten Anwendungsbereichen angepaßt werden.

Die Herstellung der erfindungsgemäß verwendbaren Dielektrika erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0—15% pleochroitische Farbstoffe zugesetzt werden, ferner Leitsalze, vorzugsweise Ethyl-dimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band *24*, Seiten 249—258, (1973)) zur Verbesserung der Leitfähigkeit oder Substanzen zur Veränderung der dielektrischen Anisotropie, der Viskosität und/oder der Orientierung der nematischen Phasen. Derartige Substanzen sind z.B. in den DE—OS 22 09 127, 22 40 864, 23 21 632, 23 38 281, 24 50 088, 26 37 430 und 28 53 728 beschrieben.

Die einzelnen Komponenten der Formel (1) sowie I bis XXV der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel (1) werden beispielsweise beschrieben in den deutschen Offenlegungsschriften 34 05 914, 34 01 320, 34 11 571, 33 15 295, und 32 09 178; in der europäischen Patentschrift EP—PS 0 019 665; in S. M. Kelly and HP. Schad, Helvetica Chimica Acta, *67,* 1580—1587 (1984); in S. M. Kelly, ebenda, *67,* 1572—1579 (1984); sowie in den europäischen Offenlegungsschriften EP—OS 0 099 099 und EP—OS 0 119 756. Entsprechende unpolare flüssigkristalline Komponenten sind beispielsweise beschrieben in den deutschen Offenlegungsschriften 33 15 295, 33 46 175, 34 01 320, 34 01 321, 34 04 116, 34 11 571; 21 67 252, 22 57 588, 24 29 093, 25 47 737, 26 41 724, 29 44 905, 29 51 099, 31 40 868, 32 28 350; in den EP—OS 0 014 885, 0 084 194, 0 104 011, 0 111 695, 0 122 389, 0 126 883 und in der japanischen OS 59—98065.

In den Verbindungen der Formel (1) bedeutet R vorzugsweise geradkettiges Alkyl oder Oxaalkyl mit 2 bis 7 C-Atomen, Z' ist vorzugsweise eine Einfachbindung, Z'' ist vorzugsweise —CO—O, —$CH_2O$— oder eine Einfachbindung, n ist vorzugsweise 0 oder 1, $Q^1$ bedeutet vorzugsweise trans-1,4-Cyclohexylen, 1,4-Phenylen oder Pyrimidin-2,5-diyl, $Q^2$ ist vorzugsweise trans-1,4-Cyclohexylen oder, besonders bevorzugt, 1,4-Phenyl, $Q^A$ ist vorzugsweise 3-Halogen-4-Cyanphenyl oder p-Isothiocyanatophenyl, wobei 3-Fluor-4-cyanphenyl besonders bevorzugt ist. Halogen bedeutet vorzugsweise Fluor.

Überraschenderweise zeigt sich, daß die erfindungsgemäße Kombination von Komponenten mit positiver dielektrischer Anisotropie und vermindertem Assoziationsgrad, insbesondere solchen Verbindungen der Formel (1) und unpolaren Komponenten ausgewählt aus der Gruppe B und aus der Gruppe C und/oder D FK-Phasen ergibt, die zum einen breite Mesophasenbereich mit niederen Schmelzpunkten und niederen smektisch-nematischen Übergangstemperaturen aufweisen, als auch bei außergewöhnlich geringer Temperaturabhängigkeit der Schwellenspannung durch besonders günstige Verhältnisse $K_3/K_1$ der elastischen Konstanten für die Biegung ($K_3$) und die Spreizung ($K_1$) und/oder besonders niedrige Schwellenspannungen gekennzeichnet sind.

Vorzugsweise enthalten die FK-Phasen der erfindungsgemäßen FK-Anzeigeelemente mindestens fünf Komponenten, insbesondere vorzugsweise mindestens zwei Komponenten, der Formel (1) und mindestens zwei, vorzugsweise mindestens vier, insbesondere mindestens sechs, unpolare Komponenten.

Der Gesamtanteil der Verbindungen der Formeln (1) beträgt vorzugsweise 10 bis 50%.

Bevorzugte Verbindungen der Formel (1) sind diejenigen der Teilformeln 1a bis 1u:

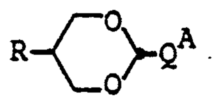

1a

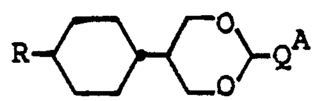

1b

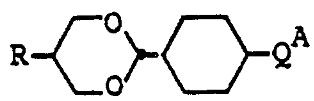

1c

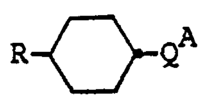

1d

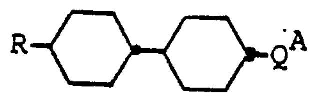

1e

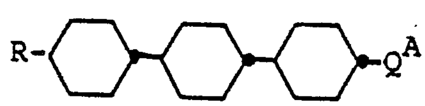

1f

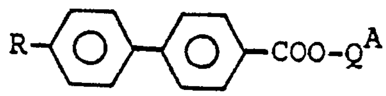

1g

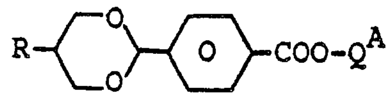
1h

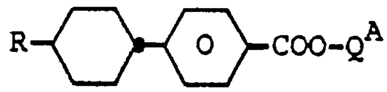
1i

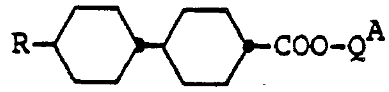
1j

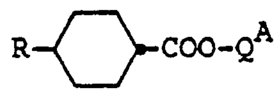
1k

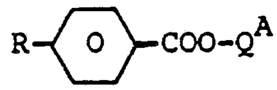
1l

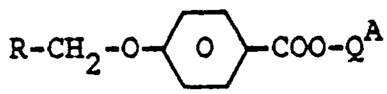
1m

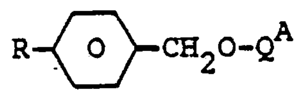
1n

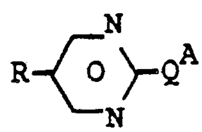
1o

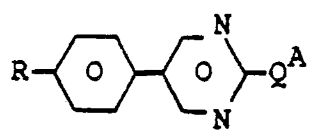
1p

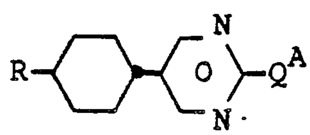
1q

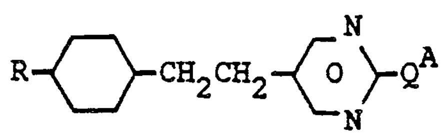
1r

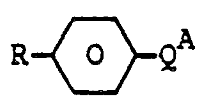
1s

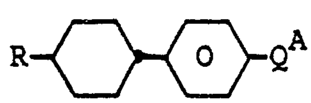
1t

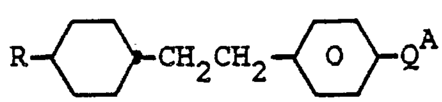
1u

Unter dem vorstehenden Teilformeln sind diejenigen der Formeln 1a, 1b, 1d, 1e, 1g, 1i, 1k, 1l, 1m und 1o bevorzugt. Besonders bevorzugt sind diejenigen der Teilformeln 1e, 1g, 1i, 1l, 1o und 1t.

Bevorzugte erfindungsgemäße FK-Phasen enthalten mindestens eine, verzugsweise mindestens zwei, Verbindungen der Formel (1), worin n = 0 bedeutet und gleichzeitig mindestens eine Verbindung der Formel I, worin n = 1 bedeutet.

Die unpolaren flüssigkristallinen Komponenten haben vorzugsweise eine dielektrische Anisotropie im Bereich von −2 bis +2, insbesondere im Bereich von −1,5 bis +1.

Beispielsweise können Verbindungen der Formel A bis I eingesetzt werden, worin Alkyl bzw. Alkoxy

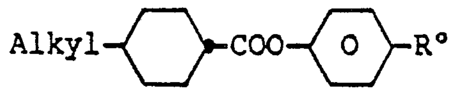
A

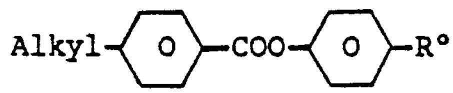
B

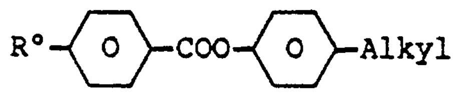
C

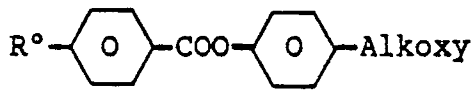
D

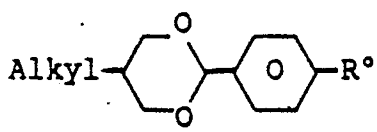
E

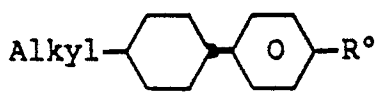
F

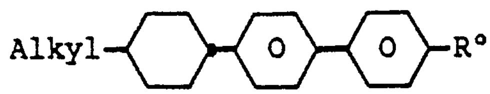
G

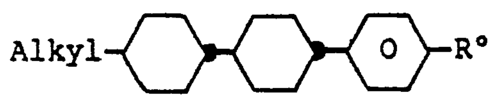
H

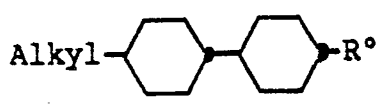
I

jeweils eine geradkettige Alkyl- bzw. Alkoxygruppe mit 1 bis 7 C-Atomen bedeutet und R° eine geradkettige Alkyl- oder Alkoxygruppe bzw. eine Oxaalkyl- oder Alkenylgruppe mit 1 bis 7 C-Atomen bedeutet.

Besonders bevorzugte Phasen enthalten mindestens eine Komponente der Formeln H und/oder I.

Auch Nitroverbindungen, die nach literaturbekannten Methoden herstellbar sind, eignen sich als

Komponenten oder Dielektrika der erfindungsgemäßen FK-Anzeigeelemente, z.B. solche der nachfolgenden Formel oder deren Homologe oder ähnliche Verbindungen:

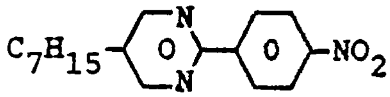 F. 92° Klp. 93°

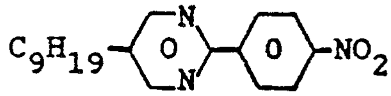 F. 83° Klp. 86°

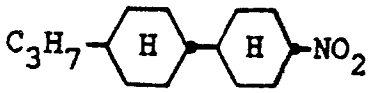 F. 61° Klp. 32°

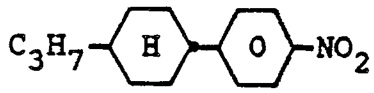 F. 36° Klp. 6°

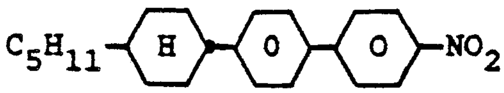 F. 115° Klp. 176°

Die Gruppe B der unpolaren Verbindungen der Formeln I und II umfaßt bevorzugte Komponenten folgender Teilformeln:

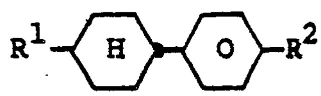 Ia

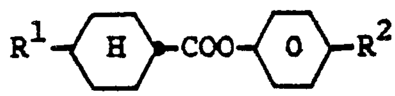 Ib

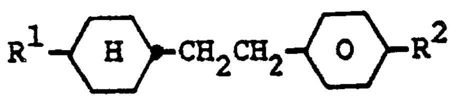 Ic

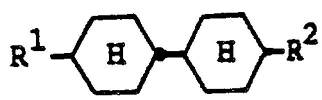 IIa

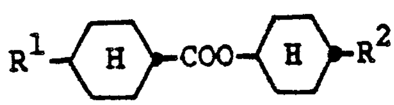 IIb

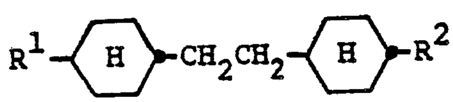 IIc

$R^1$ und $R^2$ bedeuten vorzugsweise jeweils unabhängig voneinander geradkettiges Alkyl, Alkoxy, Oxaalkyl, Alkanoyloxy oder trans-Alkenyl mit vorzugsweise jeweils 2 bis 7 C-Atomen. Vorzugsweise bedeutet $R^1$ Alkyl oder Oxaalkyl und $R^2$ Alkyl, Alkoxy oder Oxaalkyl.

Besonders bevorzugt sind Verbindungen der Teilformeln Ia und IIa, insbesondere solche worin $R^1$ geradkettiges Alkyl mit 2 bis 5 C-Atomen und $R^2$ geradkettiges Alkyl, Alkoxy, Oxaalkyl (z.B. Alkoxymethyl) oder Alkanoyloxy mit jeweils 2 bis 5 C-Atomen bedeutet.

Der Anteil der Komponenten aus der Gruppe B liegt vorzugsweise bei 10 bis 60%, vorzugsweise bei 26 bis 50%. Vorzugsweise enthalten die Phasen mindestens zwei, insbesondere drei bis sechs Komponenten aus der Gruppe B.

Die Gruppe C der un polaren Verbindungen der Formeln III bis VI umfaßt bevorzugte Komponenten folgender Teilformeln:

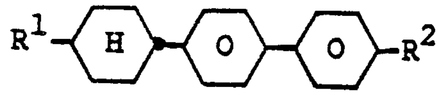
IIIa

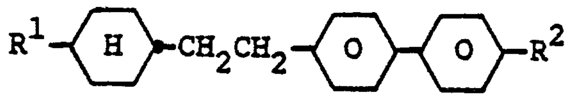
IIIb

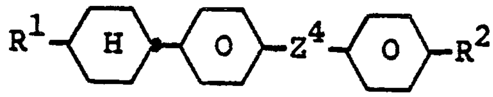
IIIc

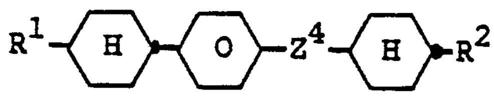
IVa

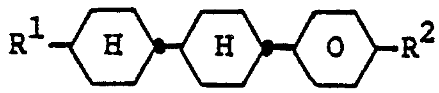
Va

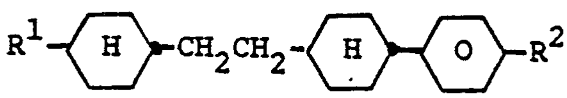
Vb

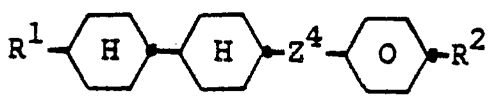
Vc

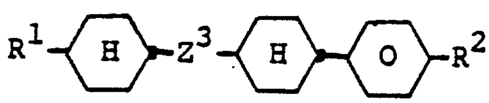
Vd

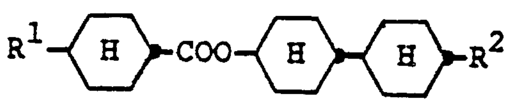
VIa

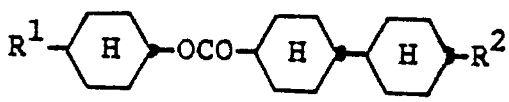
VIb

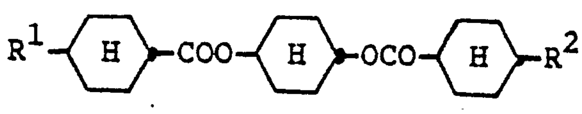
VIc

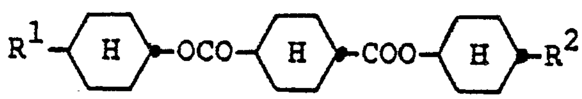
VId

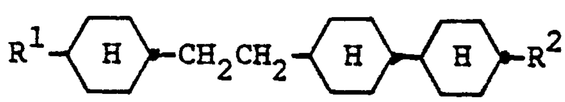
VIe

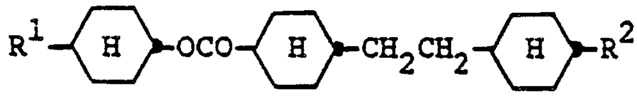 VIf

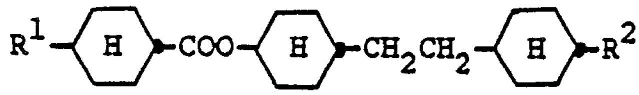 VIg

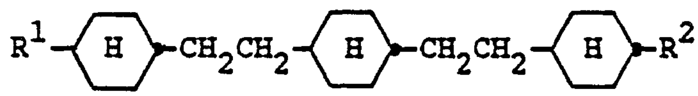 VIh

$R^1$ und $R^2$ bedeuten vorzugsweise jeweils unabhängig voneinander geradkettiges Alkyl, Alkoxy, Oxaalkyl, Alkanoyloxy oder trans-Alkenyl mit vorzugsweise jeweils 2 bis 7 C-Atomen. Vorzugsweise bedeutet $R^1$ Alkyl oder Oxaalkyl und $R^2$ Alkyl, Alkoxy oder Oxaalkyl.

Die Gruppe D der unpolaren Komponenten der Formel VII bis XI umfaßt bevorzugte Verbindungen der Teilformeln:

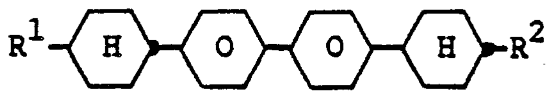

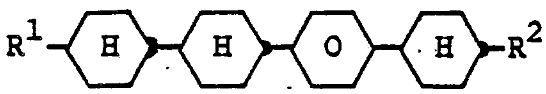

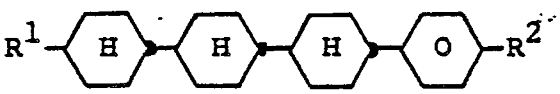

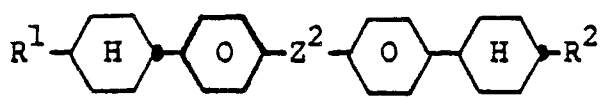

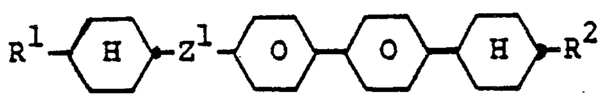

sowie lateral monofluorierte Analoga.

Bevorzugte Verbindungen aus der Gruppe E sind diejenigen der Formeln XII, XIII, XIV und XVII. In den Verbindungen der Formeln XIII und XIV sind $R^1$ und $R^2$ jeweils unabhängig voneinander vorzugsweise geradkettiges Alkyl mit vorzugsweise 2 bis 7 C-Atomen. In den Verbindungen der Formeln XII, XV, XVI und XVII ist $R^1$ vorzugsweise geradkettiges Alkyl, Alkoxy oder Alkanoyloxy mit 2 bis 7 C-Atomen; $R^2$ ist vorzugsweise geradkettiges Alkyl mit 2 bis 7 C-Atomen.

Der Anteil von Komponenten mit deutlich positiver dielektrischen Anisotropie ($\Delta\varepsilon > 5$) neben solchen Komponenten aus der Gruppe A kann zwischen 0 und 20% liegen. Vorzugsweise beträgt dieser Anteil nicht mehr als 10%, vorzugsweise nicht mehr als 7%. Besonders bevorzugt sind Anteile von nicht mehr als 5%, insbesonderen bicht mehr als 3%. Ganz besonders bevorzugt sind Phasen, die neben Komponenten aus der Gruppe A (vorzugsweise Komponenten der Formel (1)) keine weiteren positiven Materialien enthalten. Als Komponenten mit $\Delta\varepsilon > 5$ kommen neben solchen aus der Gruppe A vorzugsweise solche aus der Gruppe F in Betracht.

Bevorzugte Verbindungen aus der Gruppe F sind diejenigen der Formeln XVIII, XIX (q ist vorzugsweise 1), XX, XXII, XXIII und XXIV. $R^1$ ist hier vorzugsweise geradkettiges Alkyl mit 2 bis 7 C-Atomen.

Das erfindungsgemäße Konzept zur Verminderung der Temperaturabhängigkeit der Schwellenspannung von FK-Anzeigeelementen läßt sich prinzipiell auf FK-Anzeigeelemente für die verschiedensten Anwendungsbereiche übertragen, z.B. Displays mit statischer Ansteuerung oder niedrigem Multiplexverhältnis. Bevorzugt sind jedoch FK-Anzeigeelemente, die Breitbereichsmischungen bzw. Breitbereichsmischungen mit niedriger Schwellenspannung (z.B. für Außenanwendungen) oder

HMPX-Multiplexmischungen (für hochinformative Displays) enthalten. Die Breitbereichsmischungen für die erfindungsgemäßen FK-Anzeigeelemente enthalten vorzugsweise Komponenten aus den Gruppen A, B, C und D. Sie können auch zusätzlich Komponenten aus der Gruppe F enthalten, vorzugsweise jedoch in einem Anteil von nicht mehr als 10%. Vorzugsweise sind mindestens zwei, insbesondere mindestens drei, Verbindungen der Formel (1), vorzugsweise in einem Anteil von 5 bis 20%, vorzugsweise 10—14%, enthalten. Der Anteil der Komponenten aus der Gruppe B (vorzugsweise mindestens 3, insbesondere mindestens 4 Verbindungen) liegt vorzugsweise bei 35 bis 55%, insbesondere bei 43 bis 50%. Der Anteil der Komponenten aus der Gruppe C (vorzugsweise mindestens zwei Verbindungen) liegt vorzugsweise bei 10 bis 30%, insbesondere bei 16 bis 23%. Es sind jedoch auch Breitbereichsmischungen möglich, die neben Komponenten aus den Gruppen A und D lediglich Komponenten aus der Gruppe B oder C enthalten. Der Anteil der Komponenten aus der Gruppe D (vorzugsweise mindestens 4 Verbindungen) liegt vorzugsweise bei 12 bis 30%, insbesondere bei 16 bis 24%.

Die Breitbereichsmischungen mit niedriger Schwellenspannung für die erfindungsgemäßen FK-Anzeigeelemente enthalten vorzugsweise Komponenten aus den Gruppen A, B, C und D. Sie können auch zusätzlich Komponenten aus der Gruppe F enthalten, vorzugsweise jedoch in einem Anteil von nicht mehr als 10%. Vorzugsweise sind mindestens vier, insbesondere mindestens sieben. Verbindung der Formel (1), vorzugsweise in einem Anteil von 30 bis 60%, vorzugsweise 37 bis 50%, enthalten. Vorzugsweise sind mehrere Verbindungen der Formel (1), worin n 0 bedeutet, und gleichzeitig mehrere Verbindungen der Formel (1), worin n 1 bedeutet, vorhanden. Der Anteil der Komponenten aus der Gruppe (vorzugsweise mindestens 2) liegt vorzugsweise bei 20 bis 50%, insbesondere bei 26 bis 38%. Der Anteil der Komponenten aus der Gruppe C (vorzugsweise mindestens zwei Verbindungen) liegt vorzugsweise bei 5 bis 20%, insbesondere bei 5 bis 10%. Es sind jedoch auch Breitbereichsmischungen möglich, die neben Komponenten aus den Gruppen A und D lediglich Komponenten aus der Gruppe B oder C enthalten. Der Anteil der Komponenten aus der Gruppe D (vorzugsweise mindestens 4 Verbindungen) liegt vorzugsweise bei 12 bis 30%, insbesondere bei 16 bis 24%.

Die HMPX-Multiplexmischungen für die erfindungsgemäßen FK-Anzeigeelemente enthalten neben Komponenten aus der Gruppe A solche aus der Gruppe E (vorzugsweise mindestens 4 Verbindungen) vorzugsweise in einem Anteil von 15 bis 45%, insbesondere 20 bis 30%. Ferner enthalten diese HMPX-Mischungen Komponenten aus der Gruppe B (vorzugsweise mindestens zwei Komponenten) vorzugsweise in einem Anteil von 20 bis 45%, insbesondere von 26 bis 36%. Zusätzlich können eine oder mehrere Verbindungen aus der Gruppe C vertreten sein (vorzugsweise ca. 15 bis 25%). Der Anteil der Komponenten aus der Gruppe D liegt vorzugsweise bei 3 bis 20%, insbesondere bei 4 bis 10%. Zusatzlich können auch Komponenten aus der Gruppe F, vorzugsweise jedoch in einem Anteil von nicht mehr als 10%, vorhanden sein.

Die Summe der Anteile der Komponenten aus den verschiedenen Gruppen beträgt normalerweise 100%. Es ist jedoch auch möglich, daß die Dielektrika neben den Komponenten aus den angegebenen Gruppen A bis F geringe Mengen (bis maximal ca. 10 bis 20%) weiterer Materialien (vorzugsweise anderer flüssigkristalliner Materialien) enthalten.

Die Temperaturabhängigkeit der Schwellenspannung in den erfindungsgemäßen FK-Anzeigeelementen beträgt für den Temperaturbereich von 0 bis 40°C vorzugsweise nicht mehr also 0,5%/°C, insbesondere nicht mehr also 0,3%/°C, bezogen auf die Schwellenspannung. Besonders bevorzugt sind FK-Anzeigeelemente mit einer Temperaturabhängigkeit der Schwellenspannung von nicht mehr als 0,15%/°C.

Die folgenden Beispiele sollen die Erfindung erläutern, ohne sie zu begrenzen.

Es bedeutet:

S—N Phasenübergangs-Temperatur smektisch-nematisch, in Grad Celsius,

Klp. Klärpunkt, in Grad Celsius,

Visk. Viskosität bei 20° (m PA.s),

Schw. Schwellenspannung einer TN-Zelle bei 20°, Beobachtungswinkel 0° (senkrecht) und 10% Konstrast.

TD. Temperaturabhängigkeit der Schwellenspannung (mV/Grad. C)

$K_3/K_1$ Verhältnis der elastischen Konstanten für die Biegung und die Spreizung

Δn Doppelbrechung

Vor- und nachstehend sind alle Temperaturen in °C angegeben. Die Prozentzahlen sind Gewichtsprozent.

Beispiel 1

Ein Gemisch aus

5% p-Ethylbenzoesäure-3-fluor-4-cyanphenylester,
5% p-Propylbenzoesäure-3-fluor-4-cyanphenylester,
20% trans-1-p-Methoxyphenyl-4-propylcyclohexan,
11% trans,trans-4-Propoxy-4'-propylcyclohexylcyclohexan,
14% trans,trans-4-Methoxy-4'-pentylcyclohexylcyclohexan,
5% trans,trans-4-Ethoxy-4'-pentylcyclohexylcyclohexan,
4% trans,trans-4-Propylcyclohexylcyclohexan-4'-carbonsäure-trans-4-propylcyclohexylester,

4% trans,trans-4-Propylcyclohexylcyclohexan-4'-carbonsäure-trans-4-pentylcyclohexylester,
4% trans,trans-4-Butylcyclohexylcyclohexan-4'-carbonsäure-trans-4-propylcyclohexylester,
4% trans,trans-4-Butylcyclohexylcyclohexan-4'-carbonsäure-trans-4-pentylcyclohexylester,
4% 4,4'-Bis-(trans-4-propylcyclohexyl)-biphenyl,
5% 4-(trans-4-pentylcyclohexyl-4'-(trans-4-propylcyclohexyl)-biphenyl,
5% 4-(trans-4-Pentylcyclohexyl-4'-(trans-4-propylcyclohexyl)-2-fluorbiphenyl,
5% 4,4'-Bis(trans-4-Propylcyclohexyl)-2-fluorbiphenyl, und
5% 4,4'-Bis(trans-4-pentylcyclohexyl)-2-fluorbiphenyl
zeigt S—N < −40°, Klp. 105°, Visk. 20, TD. 3,5, $K_3/K_1$ 1,23, Schw. 2,6 V und Δn 0,095.

## Beispiel 2

Ein Gemisch aus
7% p-Ethylbenzoesäure-3-fluor-4-cyanphenylester,
7% p-Propylbenzoesäure-3-fluor-4-cyanphenylester,
6% p-(5-Pentyl-1,3-dioxan-2-yl)-benzoesäure-3-fluor-4-cyanphenylester,
15% trans-1-p-Methoxyphenyl-4-propylcyclohexan,
10% trans-1-p-Ethoxyphenyl-4-propylcyclohexan,
10% trans,trans-4-Propoxy-4'-propylcyclohexylcyclohexan,
8% trans,trans-4-Methoxy-4'-pentylcyclohexylcyclohexan,
11% 4-Ethyl-4'-(trans-4-propylcyclohexyl)-biphenyl,
10% 4-Ethyl-4'-(trans-4-pentylcyclohexyl)-biphenyl,
4% 4,4'-Bis-(trans-4-propylcyclohexyl)-biphenyl,
4% 4,4'-Bis-(trans-4-propylcyclohexyl)-2-fluorbiphenyl,
4% 4-(trans-4-Pentylcyclohexyl)-4'-(trans-4-propylcyclohexyl)-biphenyl und
4% 4-(trans-4-Pentylcyclohexyl)-4'-(trans-4-propylcyclohexyl)-2-fluorbiphenyl zeigt S—N < −40°, Klp. 96°, Visk. 21, TD. 3,4, Schw. 1,9 V und Δn 0,125.

## Beispiel 3

Ein Gemisch aus
5% p-Ethylbenzoesäure-3-fluor-4-cyanphenylester,
5% p-Propylbenzoesäure-3-fluor-4-cyanphenylester,
5% trans-1-p-Propylphenyl-4-pentylcyclohexan,
21% trans-1-p-Methoxyphenyl-4-propylcyclohexan,
14% trans-1-p-Ethoxyphenyl-4-propylcyclohexan,
12% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
4% 4,4'-Bis-(trans-4-propylcyclohexyl)-2-fluorbiphenyl,
5% 4-(trans-4-Pentylcyclohexyl)-4'-(trans-4-propylcyclohexyl)-biphenyl,
5% 4-(trans-4-Pentylcyclohexyl)-4'-(trans-4-propylcyclohexyl)-2-fluorbiphenyl und
5% 4,4'-Bis(trans-4-pentylcyclohexyl)-2-fluorbiphenyl
zeigt S—N < −40°, Klp. 101°, Visk. 18, $K_3/K_1$ 1,20, TD. 3,0, Schw. 2,8 V und Δn 0,131.

## Beispiel 4

Ein Gemisch aus
3% p-Ethylbenzoesäure-3-fluor-4-cyanphenylester,
4% p-Propylbenzoesäure-3-fluor-4-cyanphenylester,
3% p-(trans-4-Propylcyclohexyl)-benzoesaüre-3-fluor-4-cyanphenylester,
5% trans-1-p-Methoxyphenyl-4-propylcyclohexan,
5% trans-1-p-Methoxyphenyl-4-pentylcyclohexan,
21% trans,trans-4-Propoxy-4'-propylcyclohexylcyclohexan,
18% trans,trans-4-Methoxy-4'-pentylcyclohexylcyclohexan,
9% trans,trans-4-Ethoxy-4'-pentylcyclohexylcyclohexan,
5% trans,trans-4-Propylcyclohexylcyclohexan-4'-carbonsäure-trans-4-propylcyclohexylester,
5% trans,trans-4-Propylcyclohexylcyclohexan-4'-carbonsäure-trans-4-pentylcyclohexylester,
5% trans,trans-4-Butylcyclohexylcyclohexan-4'-carbonsäure-trans-4-propylcyclohexylester,
4% trans,trans-4-Butylcyclohexylcyclohexan-4'-carbonsäure-trans-4-pentylcyclohexylester,
4% 4,4'-Bis-(trans-4-propylcyclohexyl)-2-fluorbiphenyl,
4% 4,4'-Bis-(trans-4-pentylcyclohexyl)-2-fluorbiphenyl und
5% 4-(trans-4-Pentylcyclohexyl)-4'-(trans-4-propylcyclohexyl)-2-fluorbiphenyl
zeigt S—N < −40°, Klp. 92°, Visk. 20, Schw. 2,5 V, TD. 4,7 und Δn 0,0775.

Beispiel 5

Man stellt ein Gemisch her, bestehend aus
5% p-Ethylbenzoesäure-3-fluor-4-cyanphenylester,
5% p-Propylbenzoesäure-3-fluor-4-cyanphenylester,
3% trans-1-p-Isothiocyanatophenyl-4-propylcyclohexan,
8% trans-1-p-Propylphenyl-4-pentylcyclohexan,
20% trans-1-p-Methoxyphenyl-4-propylcyclohexan,
13% trans-1-p-Ethoxyphenyl-4-propylcyclohexan,
12% 4-Ethyl-4′-(trans-4-propylcyclohexyl)-biphenyl,
11% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,
5% 4,4′-(trans-4-Pentylcyclohexyl)-4′-(trans-4-propylcyclohexyl)-biphenyl
5% 4-(trans-4-Pentylcyclohexyl)-4′-(trans-4-propylcyclohexyl)-2-fluorbiphenyl und
5% 4,4′-Bis-(trans-4-pentylcyclohexyl)-2-fluorbiphenyl.

Beispiel 6

Man stellt ein Gemisch her, bestehend aus
4% p-Ethylbenzoesäure-3-fluor-4-cyanphenylester,
4% p-Propylbenzoesäure-3-fluor-4-cyanphenylester,
8% trans-1-p-Propylphenyl-4-pentylcyclohexan,
19% trans-1-p-Methoxyphenyl-4-propylcyclohexan,
13% trans-1-p-Ethoxyphenyl-4-propylcyclohexan,
12% 4-Ethyl-4′-(trans-4-propylcyclohexyl)-biphenyl,
11% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,
5% 4-(trans-4-Pentylcyclohexyl)-4′-(trans-4-propylcyclohexyl)-2-biphenyl,
5% 4-(trans-4-Pentylcyclohexyl)-4′-(trans-4-propylcyclohexyl)-2-fluorbiphenyl,
5% 4,4′-Bis(trans-4-pentylcyclohexyl)-2-fluorbiphenyl,
2% trans,trans-4′-Nitro-4-propylcyclohexylcyclohexan,
2% trans-1-p-Nitrophenyl-4-propylcyclohexan und
2% 4-Nitro-4′-(trans-4-pentylcyclohexyl)-biphenyl.

Beispiel 7

Man stellt ein Gemisch her, bestehend aus
5% p-Ethylbenzoesäure-3-fluor-4-cyanphenylester,
5% p-Propylbenzoesäure-3-fluor-4-cyanphenylester,
3% trans,trans-4′-Propyl-4-(4-cyan-3-fluorphenyl)cyclohexylcyclohexan,
8% trans-1-p-Propylphenyl-4-pentylcyclohexan,
20% trans-1-p-Methoxyphenyl-4-propylcyclohexan,
13% trans-1-p-Ethoxyphenyl-4-propylcyclohexan,
12% 4-Ethyl-4′-(trans-4-propylcyclohexyl)-biphenyl,
11% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,
5% 4-(trans-4-Pentylcyclohexyl)-4′-(trans-4-propylcyclohexyl)-biphenyl,
5% 4-(trans-4-Pentylcyclohexyl)-4′-(trans-4-propylcyclohexyl)-2-fluorbiphenyl und
5% 4,4′-Bis(trans-4-pentylcyclohexyl)-2-fluorbiphenyl.

Beispiel 8

Ein Gemisch aus
3% p-Ethylbenzoesäure-3-fluor-4-cyanphenylester,
4% p-Propylbenzoesäure-3-fluor-4-cyanphenylester,
10% p-Pentylbenzoesäure-3-fluor-4-cyanphenylester,
5% p-Heptpylbenzoesäure-3-fluor-4-cyanphenylester,
5% p-(trans-4-Propylcyclohexyl)-benzoesäure-3-fluor-4-cyanphenylester,
6% p-(trans-4-Butylcyclohexyl)-benzoesäure-3-fluor-4-cyanphenylester,
4% p-(trans-4-Pentylcyclohexyl)-benzoesäure-3-fluor-4-cyanphenylester,
24% trans-1-p-Methoxyphenyl-4-propylcyclohexan,
14% trans,trans-4′-Propoxy-4-propylcyclohexylcyclohexan,
4% 4-Ethyl-4′-(trans-4-propylcyclohexyl)-biphenyl,
4% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,

5% 4-(trans-4-Pentylcyclohexyl)-4'-(trans-4-propylcyclohexyl)-biphenyl, und
4% 4-(trans-4-Pentylcyclohexyl)-4'-(trans-4-propylcyclohexyl)-2-fluorbiphenyl
zeigt S—N < –40°, Klp. 93°, Visk. 31, Δn 0,131, Schw. 1,5 V und TD. 1,3.

Beispiel 9

Ein Gemisch aus
4% p-Ethylbenzoesäure-3-fluor-4-cyanphenylester,
6% p-Propylbenzoesäure-3-fluor-4-cyanphenylester,
12% p-Pentylbenzoesäure-3-fluor-4-cyanphenylester,
6% p-Heptpylbenzoesäure-3-fluor-4-cyanphenylester,
5% p-(trans-4-Propylcyclohexyl)-benzoesäure-3-fluor-4-cyanphenylester,
7% p-(trans-4-Butylcyclohexyl)-benzoesäure-3-fluor-4-cyanphenylester,
4% p-(trans-4-Pentylcyclohexyl)-benzoesäure-3-fluor-4-cyanphenylester,
18% trans-1-p-Methoxyphenyl-4-propylcyclohexan,
14% trans,trans-4'-Propoxy-4-propylcyclohexylcyclohexan,
4% 4-Ethyl-4'-(trans-4-propylcyclohexyl)-biphenyl,
3% 4-Ethyl-4'-(trans-4-pentylcyclohexyl)-biphenyl,
4% 4,4'-Bis-(trans-4-propylcyclohexyl)-biphenyl,
5% 4,4'-Bis-(trans-4-propylcyclohexyl)-2-fluorbiphenyl,
4% 4-(trans-4-Pentylcyclohexyl)-4'-(trans-4-propylcyclohexyl)-biphenyl, und
4% 4-(trans-4-Pentylcyclohexyl)-4'-(trans-4-propylcyclohexyl)-2-fluorbiphenyl
zeigt S—N < –30°, Klp. 90°, Visk. 38, Δn 0,137, Schw. 1,2 V und TD. 1,2.

Beispiel 10

Ein Gemisch aus
5% p-Ethylbenzoesäure-3-fluor-4-cyanphenylester,
7% p-Propylbenzoesäure-3-fluor-4-cyanphenylester,
15% p-Pentylbenzoesäure-3-fluor-4-cyanphenylester,
6% p-Heptpylbenzoesäure-3-fluor-4-cyanphenylester,
5% p-(trans-4-Propylcyclohexyl)-benzoesäure-3-fluor-4-cyanphenylester,
7% p-(trans-4-Butylcyclohexyl)-benzoesäure-3-fluor-4-cyanphenylester,
5% p-(trans-4-Pentylcyclohexyl)-benzoesäure-3-fluor-4-cyanphenylester,
12% trans-1-p-Methoxyphenyl-4-propylcyclohexan,
14% trans,trans-4'-Propoxy-4-propylcyclohexylcyclohexan,
4% 4-Ethyl-4'-(trans-4-propylcyclohexyl)-biphenyl,
3% 4-Ethyl-4'-(trans-4-pentylcyclohexyl)-biphenyl,
4% 4,4'-Bis-(trans-4-propylcyclohexyl)-biphenyl,
5% 4,4'-Bis-(trans-4-propylcyclohexyl)-2-fluorbiphenyl,
4% 4-(trans-4-Pentylcyclohexyl)-4'-(trans-4-propylcyclohexyl)-biphenyl, und
4% 4-(trans-4-Pentylcyclohexyl)-4'-(trans-4-propylcyclohexyl)-2-fluorbiphenyl
zeigt S—N < –30°, Klp. 96°, Visk. 47, Δn 0,143, Schw. 1,2 V und TD. 0,7.

Beispiel 11

Ein Gemisch aus
5% p-Ethylbenzoesäure-3-fluor-4-cyanphenylester,
5% p-Propylbenzoesäure-3-fluor-4-cyanphenylester,
8% p-Pentylbenzoesäure-3-fluor-4-cyanphenylester,
8% p-(trans-4-Propylcyclohexyl)-benzoesäure-3-fluor-4-cyanphenylester,
5% p-(trans-4-Butylcyclohexyl)-benzoesäure-3-fluor-4-cyanphenylester,
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
16% Buttersäure-p-(trans-4-propylcyclohexylphenylester),
13% trans-1-p-Propylphenyl-4-pentylcyclohexan,
6% 4-(trans-4-Pentylcyclohexyl)-4'-(trans-4-propylcyclohexyl)-2-fluorbiphenyl, und
4% 4,4'-Bis-(trans-4-pentylcyclohexyl)-2-fluorbiphenyl
zeigt S—N < –30°, Klp. 65°, Visk. 52, Δn 0,136, $K_3/K_1$ 0,79, Schw. 1,5 V und TD. 8.

Beispiel 12

Ein Gemisch aus
4% p-Ethylbenzoesäure-3-fluor-4-cyanphenylester,
5%. p-Propylbenzoesäure-3-fluor-4-cyanphenylester,

5% 2-(3-Fluor-4-cyanphenyl)-5-hexylpyrimdin,
4% 2-(3-Fluor-4-cyanphenyl)-5-heptylpyrimdin,
11% 4-Ethyl-4'-(trans-4-propylcyclohexyl)-biphenyl,
11% 4-Ethyl-4'-(trans-4-pentylcyclohexyl)-biphenyl,
5% 2-p-Pentyloxyphenyl-5-hexylpyrimidin,
5% 2-p-Hexyloxyphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
4% 4-(trans-4-Pentylcyclohexyl)-4'-(trans-4-propylcyclohexyl)-2-fluorbiphenyl, 11% trans-1-p-Methoxyphenyl-4-propylcyclohexan und
15% trans-1-p-Ethoxyphenyl-4-propylcyclohexan.
zeigt Klp. 65°, Visk. 36, Schw. 1,9 V, $K_3/K_1$ 0,74 und Δn 0,143.

## Beispiel 13

Man stellt ein Gemisch her, bestehend aus
4% p-Ethylbenzoesäure-3-fluor-4-cyanphenylester,
5% p-Propylbenzoesäure-3-fluor-4-cyanphenylester,
5% 2-(3-Fluor-4-cyanphenyl)-5-hexylpyrimidin,
4% 2-(3-Fluor-4-cyanphenyl)-5-heptylpyrimidin,
11% 4-Ethyl-4'-(trans-4-propylcyclohexyl)-biphenyl,
11% 4-Ethyl-4'-(trans-4-pentylcyclohexyl)-biphenyl,
5% 2-p-Pentylphenyl-5-hexylpyrimdin,
5% 2-p-Hexylphenyl-5-hexylpyrimidin,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
4% 4-(trans-4-Pentylcyclohexyl)-4'-(trans-4-propylcyclohexyl)-2-fluorbiphenyl,
11% trans-1-p-Methoxyphenyl-4-propylcyclohexan und
15% trans-1-p-Ethoxyphenyl-4-propylcyclohexan.

## Beispiel 14

Ein Gemisch aus
5% p-Ethylbenzoesäure-3-fluor-4-cyanphenylester,
6% p-Propylbenzoesäure-3-fluor-4-cyanphenylester,
8% p-Pentylbenzoesäure-3-fluor-4-cyanphenylester,
8% p-(trans-4-Propylcyclohexyl)-benzoesäure-3-fluor-4-cyanphenylester,
7% p-(trans-4-Butylcyclohexyl)-benzoesäure-3-fluor-4-cyanphenylester,
5% 2-p-Butoxyphenyl-5-propyl-1,3-dioxan,
5% 2-p-Butoxyphenyl-5-pentyl-1,3-dioxan,
5% 2-p-Heptyloxyphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,
13% Buttersäure-(p-trans-4-propylcyclohexylphenylester),
13% trans-1-p-Propylphenyl-4-pentylcyclohexan,
6% 4-(trans-4-Pentylcyclohexyl)-4'-(trans-4-propylcyclohexyl)-2-fluorbiphenyl und
4% 4,4'-Bis-(trans-4-pentylcyclohexyl)-2-fluorbiphenyl
zeigt S—N < −30°, Klp. 66°, Visk. 52, $K_3/K_1$ 0,89, Δn 0,131, Schw. 1,4 V und TD. 5,8.

## Beispiel 15

Man stellt ein Gemisch her, bestehend aus
5% p-Ethylbenzoesäure-3-fluor-4-cyanphenylester,
6% p-Propylbenzoesäure-3-fluor-4-cyanphenylester,
8% p-Pentylbenzoesäure-3-fluor-4-cyanphenylester,
8% p-(trans-4-Propylcyclohexyl)-benzoesäure-3-fluor-4-cyanphenylester,
7% p-(trans-4-Butylcyclohexyl)-benzoesäure-3-fluor-4-cyanphenylester,
5% 2-p-Nitrophenyl-5-heptylpyrimidin,
5% 2-p-Nitrophenyl-5-nonylpyrimidin,
5% 2-p-Heptylphenyl-5-hexylpyrimidin,
5% 2-p-Nonyloxyphenyl-5-hexylpyrimidin,
5% 2-p-Heptyloxyphenyl-5-heptylpyrimidin,
5% 2-p-Nonyloxyphenyl-5-heptylpyrimidin,

13% Buttersäure-(p-trans-4-propylcyclohexylphenylester),
13% trans-1-p-Propylphenyl-4-pentylcyclohexan,
6% 4-(trans-4-Pentylcyclohexyl)-4′-(trans-4-propylcyclohexyl)-2-fluorbiphenyl, und
4% 4,4′-Bis-(trans-4-pentylcyclohexyl)-2-fluorbiphenyl

Beispiel 16

Man stellt ein Gemisch her, bestehend aus
3% p-Ethylbenzoesäure-3-fluor-4-cyanphenylester,
4% p-Propylbenzoesäure-3-fluor-4-cyanphenylester,
8% p-Pentylbenzoesäure-3-fluor-4-cyanphenylester,
4% p-Heptylbenzoesäure-3-fluor-4-cyanphenylester,
5% p-(trans-4-Propylcyclohexyl)-benzoesäure-3-fluor-4-cyanphenylester,
6% p-(trans-4-Butylcyclohexyl)-benzoesäure-3-fluor-4-cyanphenylester,
4% p-(trans-4-Pentylcyclohexyl)-benzoesäure-3-fluor-4-cyanphenylester,
24% trans-1-p-Methoxyphenyl-4-propylcyclohexan,
14% trans,trans-4′-Propoxy-4-propylcyclohexylcyclohexan,
4% 4-Ethyl-4′-(trans-4-propylcyclohexyl)-biphenyl,
4% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,
5% 4-trans-4-Pentylcyclohexyl)-4′-(trans-4-propylcyclohexyl)-biphenyl,
4% 4-trans-4-Pentylcyclohexyl)-4′-(trans-4-propylcyclohexyl)-2-fluorbiphenyl und
3% trans,trans-4′-propyl-4-(p-cyanphenyl)-cyclohexylcyclohexan.

Beispiel 17

Man stellt ein Gemisch her, bestehend aus
3% p-Ethylbenzoesäure-3-fluor-4-cyanphenylester,
4% p-Propylbenzoesäure-3-fluor-4-cyanphenylester,
9% p-Pentylbenzoesäure-3-fluor-4-cyanphenylester,
4% p-Heptylbenzoesäure-3-fluor-4-cyanphenylester,
4% p-(trans-4-Propylcyclohexyl)-benzoesäure-3-fluor-4-cyanphenylester,
5% p-(trans-4-Butylcyclohexyl)-benzoesäure-3-fluor-4-cyanphenylester,
3% p-(trans-4-Pentylcyclohexyl)-benzoesäure-3-fluor-4-cyanphenylester,
24% trans-1-p-Methoxyphenyl-4-propylcyclohexan,
14% trans,trans-4′-Propoxy-4-propylcyclohexylcyclohexan,
4% 4-Ethyl-4′-(trans-4-propylcyclohexyl)-biphenyl,
4% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,
5% 4-(trans-4-Pentylcyclohexyl)-4′-(trans-4-propylcyclohexyl)-biphenyl,
4% 4-(trans-4-Pentylcyclohexyl)-4′-(trans-4-propylcyclohexyl)-2-fluorbiphenyl und
5% 4-Ethyl-4′-cyanbiphenyl.

Beispiel 18

Man stellt ein Gemisch her, bestehend aus
2% p-Ethylbenzoesäure-3-fluor-4-cyanphenylester,
3% p-Propylbenzoesäure-3-fluor-4-cyanphenylester,
9% p-Pentylbenzoesäure-3-fluor-4-cyanphenylester,
4% p-Heptylbenzoesäure-3-fluor-4-cyanphenylester,
4% p-(trans-4-Propylcyclohexyl)-benzoesäure-3-fluor-4-cyanphenylester,
5% p-(trans-4-Butylcyclohexyl)-benzoesäure-3-fluor-4-cyanphenylester,
3% p-(trans-4-Pentylcyclohexyl)-benzoesäure-3-fluor-4-cyanphenylester,
24% trans-1-p-Methoxyphenyl-4-propylcyclohexan,
14% trans,trans-4′-Propoxy-4-propylcyclohexylcyclohexan,
4% 4-Ethyl-4′-(trans-4-propylcyclohexyl)-biphenyl,
4% 4-Ethyl-4′-(trans-4-pentylcyclohexyl)-biphenyl,
4% 4,4′-Bis-(trans-4-propylcyclohexyl)-biphenyl,
4% 4,4′-Bis-(trans-4-propylcyclohexyl)-2-fluorbiphenyl,
5% 4-(trans-4-Pentylcyclohexyl)-4′-(trans-4-propylcyclohexyl)-biphenyl,
4% 4-(trans-4-Pentylcyclohexyl)-4′-(trans-4-propylcyclohexyl)-2-fluorbiphenyl und
7% p-trans-4-Pentylcyclohexylbenzonitril.

Beispiel 19

Man stellt ein Gemisch her, bestehend aus

2% p-Ethylbenzoesäure-3-fluor-4-cyanphenylester,
3% p-Propylbenzoesäure-3-fluor-4-cyanphenylester,
8% p-Pentylbenzoesäure-3-fluor-4-cyanphenylester,
3% p-Heptylbenzoesäure-3-fluor-4-cyanphenylester,
3% p-(trans-4-Propylcyclohexyl)-benzoesäure-3-fluor-4-cyanphenylester,
5% p-(trans-4-Butylcyclohexyl)-benzoesäure-3-fluor-4-cyanphenylester,
3% p-(trans-4-Pentylcyclohexyl)-benzoesäure-3-fluor-4-cyanphenylester,
24% trans-1-p-Methoxyphenyl-4-propylcyclohexan,
14% trans,trans-4'-Propoxy-4-propylcyclohexylcyclohexan,
4% 4-Ethyl-4'-(trans-4-propylcyclohexyl)-biphenyl,
4% 4-Ethyl-4'-(trans-4-pentylcyclohexyl)-biphenyl,
4% 4,4'-Bis-(trans-4-propylcyclohexyl)-biphenyl,
4% 4,4'-Bis-(trans-4-propylcyclohexyl)-2-fluorbiphenyl,
5% 4-(trans-4-Pentylcyclohexyl)-4'-(trans-4-propylcyclohexyl)-biphenyl,
4% 4-(trans-4-Pentylcyclohexyl)-4'-(trans-4-propylcyclohexyl)-2-fluorbiphenyl und
10% p-Propylbenzosäure-4-cyanphenylester.

Beispiel 20

Man stellt ein Gemisch her, bestehend aus

5% p-Ethylbenzoesäure-3-fluor-4-cyanphenylester,
5% p-Propylbenzoesäure-3-fluor-4-cyanphenylester,
3% p-trans-1-(trans-4-isothiocyanatocyclohexyl)-4-propylcyclohexan,
8% trans-1-p-Propylphenyl-4-pentylcyclohexan,
20% trans-1-p-Methoxyphenyl-4-propylcyclohexan,
13% trans-1-p-Ethoxyphenyl-4-propylcyclohexan,
12% 4-Ethyl-4'-(trans-4-propylcyclohexyl)-biphenyl,
11% 4-Ethyl-4'-(trans-4-pentylcyclohexyl)-biphenyl,
4% 4,4'-Bis-(trans-4-propylcyclohexyl)-biphenyl,
4% 4,4'-Bis-(trans-4-propylcyclohexyl)-2-fluorbiphenyl,
5% 4-(trans-4-Pentylcyclohexyl)-4'-(trans-4-propylcyclohexyl)-biphenyl,
5% 4-(trans-4-Pentylcyclohexyl)-4'-(trans-4-propylcyclohexyl)-2-fluorbiphenyl und
5% 4,4'-Bis(trans-4-pentylcyclohexyl)-2-fluorbiphenyl.

Beispiel 21

Man stellt ein Gemisch her, bestehend aus

4% p-Ethylbenzoesäure-3-fluor-4-cyanphenylester,
5% p-Propylbenzoesäure-3-fluor-4-cyanphenylester,
5% 2-(3-Fluor-4-cyanphenyl)-5-hexylpyrimidin,
4% 2-(3-Fluor-4-cyanphenyl)-5-heptylpyrimidin,
11% 4-Ethyl-4'-(trans-4-propylcyclohexyl)-biphenyl,
11% 4-Ethyl-4'-(trans-4-pentylcyclohexyl)-biphenyl,
5% 2-p-Pentylphenyl-5-hexylpyrimidin,
5% 2-p-Hexylphenyl-5-hexylpyrimidin,
5% 2-p-Nonylphenyl-5-hexylpyrimidin,
5% 2-p-Heptylphenyl-5-hexylpyrimidin,
5% 2-p-Nonylphenyl-5-heptylpyrimidin,
4% 4-(trans-4-Pentylcyclohexyl)-4'-(trans-4-propylcyclohexyl)-2-fluorbiphenyl,
11% trans-1-p-Methoxyphenyl-4-propylcyclohexan und
15% trans-1-p-Ethoxyphenyl-4-propylcyclohexan.

Die Gemische aus den Beispielen 1 bis 21 zeigen in FK-Anzeigeelementen (wie angegeben) besonders geringe Temperaturabhängigkeit der Schwellenspannung von nicht mehr als 0,5%/°C im Temperaturbereich von 0 bis 40°C.

Die vorausgehenden Beispiele betreffen insbesondere Breitbereichsmischungen (Beispiele 1 bis 7 und 20), Breitbereichmischungen mit niedriger Schwellenspannung (Beispiele 8 bis 10 und 16 bis 19), sowie Mischungen für hohe Multiplexverhältnisse (Beispiele 11 bis 15 und 21).

**Patentansprüche**

1. Elektrooptisches Anzeigeelement mit geringer Temperaturabhängigkeit der Schwellenspannung, dadurch gekennzeichnet, daß es eine Flüssigkristallphase enthält mit mindestens einer Komponente (A) mit einem verminderten Assoziationsgrad, wobei unter Verbindungen mit verminderten Assoziationsgrad hier solche Flüssigkristallverbindungen verstanden werden sollen, die bei ähnlichem Gesamtdipolmoment des Moleküls (aus Vektor-Addition der Einzeldipolmomente der Strukturelemente) durch verminderte antiparallele Assoziation der Molekülverbindungen eine höhere dielektrische Anisotropie ziegen als Verbindungen wie 4-Alkyl-4'-cyanbiphenyle oder p-trans-4-Alkylcyclohexyl-benzonitrile, mindestens einer Komponente ausgewählt aus der Gruppe B, bestehend aus den Verbindungen der Formel I und II

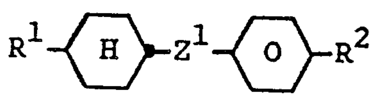

I

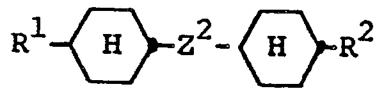

II

worin

$R^1$ und $R^2$ jeweils unabhängig voneinander Alkyl mit 1 bis 7 C-Atomen bedeuten, worin auch eine oder zwei nicht benachbarte $CH_2$— Gruppen durch —O—, —CO—, —O—CO—, —CO—O— und/oder —CH=CH- (trans) ersetzt sein können, und

$Z^1$ und $Z^2$ jeweils —CO—O—, —$CH_2$O—, —$CH_2CH_2$— oder eine Einfachbindung bedeutet, mindestens einer Komponente ausgewählt aus der Gruppe C bestehend aus den Verbindungen der Formel III bis VI

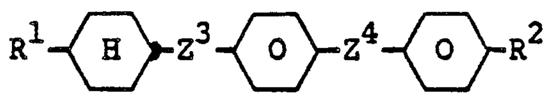

III

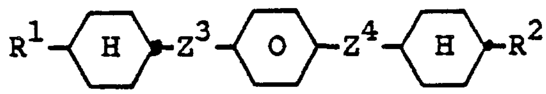

IV

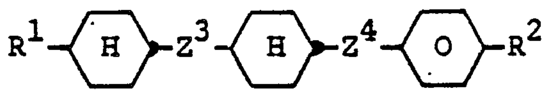

V

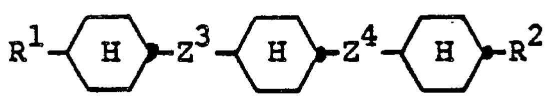

VI

worin

$R^1$ und $R^2$ jeweils unabhängig voneinander Alkyl mit 1 bis 7 C-Atomen bedeuten, worin auch eine oder zwei nicht benachbarte $CH_2$— Gruppen durch —O—, —CO—, —O—CO—, —CO—O— und/oder —CH=CH- (trans) ersetzt sein können, und

$Z^3$ und $Z^4$ jeweils unabhängig voneinander —CO—O—, —O—CO—, —$CH_2CH_2$— oder eine Einfachbindung bedeuten, und/oder mindestens eine Komponente ausgewählt aus der Gruppe D bestehend aus den Verbindungen der Formeln VII bis XI

$$R^1-A^1-Z^1-A^2-A^3-Z^3-A^4-R^2 \qquad VII$$

$$R^1-A^1-Z^1-A^2-Z^2-A^3-A^4-R^2 \qquad VIII$$

$$R^1-A^1-Z^1-A^2-A^3-A^4-R^2 \qquad IX$$

$$R^1-A^1-A^2-Z^2-A^3-A^4-R^2 \qquad X$$

$$R^1-A^1-A^2-A^3-A^4-R^2 \qquad XI$$

worin

$R^1$ und $R^2$ jeweils unabhängig voneinander Alkyl mit 1 bis 7 C-Atomen bedeuten, worin auch eine oder zwei nicht benachbarte $CH_2$— Gruppen durch —O—, —CO—, —O—CO—, —CO—O— und/oder —CH=CH- (trans) ersetzt sein können,

$A^1$, $A^2$, $A^3$ und $A^4$ jeweils unabhängig voneinander trans-1,4-Cyclohexylen oder unsubstituiertes oder durch ein oder zwei F- oder Cl- Atome und/oder $CH_3$— oder CN-Gruppen substituiertes 1,4-Phenylen, und

$Z^1$, $Z^2$ und $Z^3$ jeweils unabhängig voneinander —CO—O—, —O—CO—, —$CH_2CH_2$—, —$CH_2O$—, —$OCH_2$— oder eine Einfachbindung bedeuten.

2. Elektrooptisches Anzeigeelement nach Anspruch 1, dadurch gekennzeichnet, daß die Komponente (A) der Flüssigkristallphase mindestens eine Verbindung der Formel (1) enthält,

$$R—(Q^1—Z')_n—Q^2—Z''—Q^A \quad (1)$$

worin

R Alkyl mit 2 bis 9 C-Atomen bedeutet, worin auch eine oder zwei nicht benachbarte $CH_2$-Gruppen durch —O—, —CO—, —O—CO—, —CO—O— und/oder —CH=CH (trans) ersetzt sein können,

Z' und Z'' jeweils —CO—O—, O—CO—, —$CH_2CH_2$—, —$CH_2O$—, —$OCH_2$— oder eine Einfachbindung,

n 0, 1 oder 2,

$Q^1$ und $Q^2$ jeweils unabhängig voneinander trans-1,4-Cyclohexylen, worin auch eine oder zwei nicht benachbarte $CH_2$-Gruppen durch —O— und/oder —S— ersetzt sein können, oder 1,4-Phenylen, worin auch eine oder mehrere CH-Gruppen durch N ersetzt sein können, bedeutet, und

$Q^A$ 3-Halogen-4-Cyanphenyl, 3-Halogen-4-isothiocyanatophenyl, 3,4-Dihalogenphenyl, p-Nitrophenyl, trans-4-Nitrocyclohexyl, trans-4-Isothiocyanatocyclohexyl oder p-Isothiocyanatophenyl ist.

3. Elektrooptisches Anzeigeelement nach Anspruch 1, dadurch gekennzeichnet, daß die Flüssigkristallphase mindestens eine Komponente ausgewählt aus der Gruppe E enthält, bestehend aus den Verbindungen der Formeln XII bis XVII

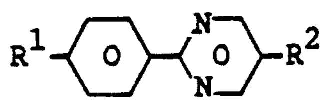

XII

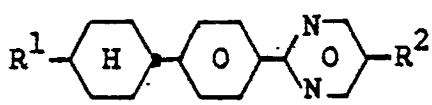

XIII

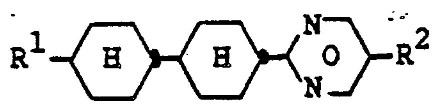

XIV

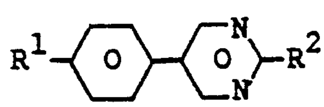

XV

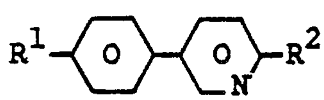

XVI

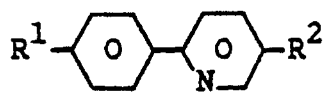

XVII

worin

$R^1$ und $R^2$ jeweils unabhängig voneinander Alkyl mit 1 bis 10 C-Atomen, worin auch eine oder zwei nicht benachbarte $CH_2$-Gruppen durch —O—, —CO—, —O—CO—, —CO—O— und/oder —CH=CH-(trans) ersetzt sein können, bedeuten.

4. Elektrooptisches Anzeigeelement nach einem der Ansprüche 1 bis 3, dadurch gekennzeichnet, daß es neben Komponenten ausgewählt aus den Gruppen A, B, C, D, bzw. E 3 bis 20% mindestens einer

Komponente enthält ausgewählt aus der Gruppe F bestehend aus den Verbindungen der Formeln XVIII bis XXV mit einer deutlich positiven dielektrischen Anisotropie ($\Delta\varepsilon > 5$)

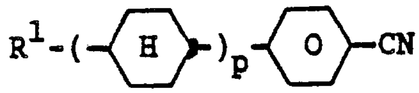 XVIII

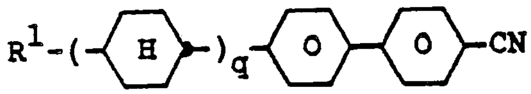 XIX

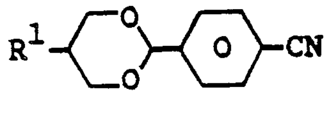 XX

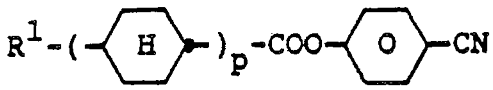 XXI

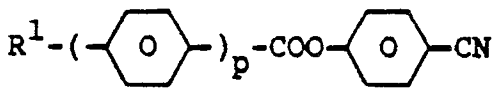 XXII

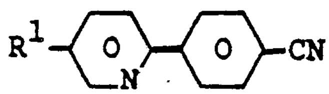 XXIII

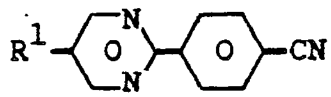 XXIV

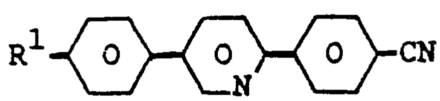 XXV

worin

$R^1$ Alkyl mit 1 bis 10 C-Atomen, worin auch eine oder zwei nicht benachbarte $CH_2$-Gruppen durch —O—, —CO—, —O—CO—, —CO—O— und/oder —CH=CH-(trans) ersetzt sein können, bedeutet, und

p 1 oder 2 und

q 0, 1 oder 2 ist.

5. Elektrooptisches Anzeigeelement nach einem der Ansprüche 1 bis 3, dadurch gekennzeichnet, daß es neben Komponenten ausgewählt aus der Gruppe A, B, C, D, bzw. E weniger als 3% an Komponenten mit einer positiven dielektrischen Anisotropie $\Delta\varepsilon > 5$ enthält.

6. Elektrooptisches Anzeigeelement nach mindestens einem der Ansprüche 1 bis 3, dadurch gekennzeichnet, daß Komponente A eine oder mehrere Verbindungen der folgenden Teilformeln enthält:

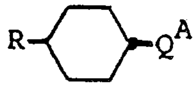 Id

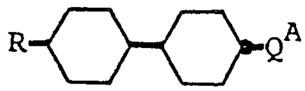 Ie

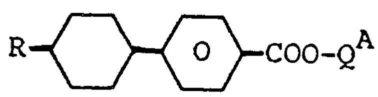 Ii

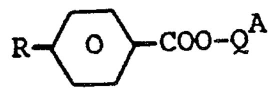 1l

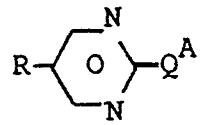 1o

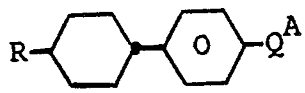 1t

7. Elektrooptisches Anzeigeelement nach einem der Ansprüche 2 bis 6, dadurch gekennzeichnet, daß Komponente A mindestens eine Verbindung der Formel (1), worin n = 0 bedeutet und gleichzeitig mindestens eine Verbindung der Formel I, worin n = 1 bedeutet, enthält.

8. Elektrooptisches Anzeigeelement nach mindestens einem der Ansprüche 1 bis 7, dadurch gekennzeichnet, daß die Flüssigkristallphase mindestens eine unpolare flüssigkristalline Komponente ausgewählt aus den Verbindungen der Formeln A bis I enthält:

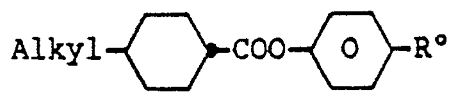 A

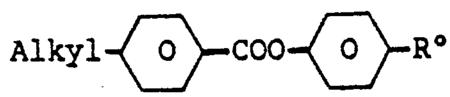 B

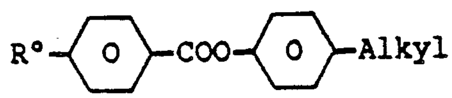 C

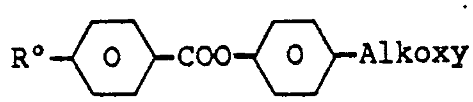 D

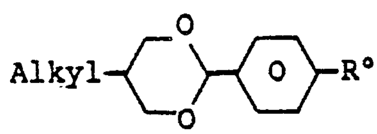 E

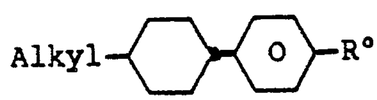 F

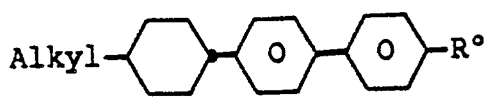 G

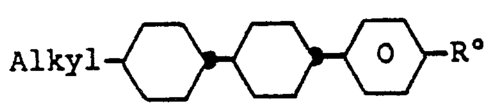 H

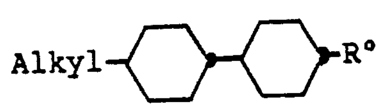 I

worin Alkyl bze. Alkoxy jeweils eine geradkettige Alkyl- bzw. Alkoxygruppe mit 1 bis 7 C-Atomen bedeutet und $R^0$ eine geradkettige Alkyl- oder Alkoxygruppe bzw. eine Oxaalkyl- oder Alkenylgruppe mit 1 bis 7 C-Atomen bedeutet.

9. Elektrooptisches Anzeigeelement nach Anspruch 8, dadurch gekennzeichnet, daß die Flüssigkristallphase mindestens eine Komponente der Formel H und/oder I enthält.

10. Flüssigkristallphase gemäß einem der Ansprüche 1 bis 9.

**Revendications**

1. Elément d'affichage électrooptique ayant une faible dépendence de la tension de seuil vis-à-vis de la température, caractérisé en ce qu'il comporte une phase à cristaux liquides ayant au moins un composant (A) avec un degré d'association diminué, où, par composés avec un degré d'association diminué, on doit comprendre ici les composés à cristaux liquides qui, pour un moment dipolaire total analogue de la molécule (par addition vectorielle des moments dipolaires isolés des éléments de structure), présentent, par suite d'une association antiparallèle diminuée des composés de la molécule, une anisotropie diélectrique plus élevée que des composés comme un 4-alkyl-4'-cyanobiphényle ou un p-trans-4-alkyl-cyclohexyl-benzonitrile, au mois un composant choisi dans le groupe (B), constitué, des composés de formules I et II

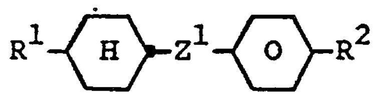

I

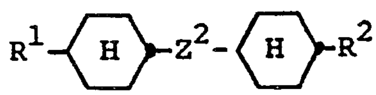

II

où

$R^1$ et $R^2$ représentent chacun, indépendamment l'un de l'autre, un alkyle ayant de 1 à 7 atomes de C, où aussi un ou deux groupes $CH_2$ non voisins peuvent être remplacés par —O—, —CO—, —O—CO—, —CO—O—, et/ou —CH=CH— (trans), et

$Z^1$ et $Z^2$ représentent chacun —CO—O—, $CH_2O$—, —$CH_2CH_2$— ou une liaison simple,

au moins un composant choisi dans le groupe C constitué par les composés de formules III à VI

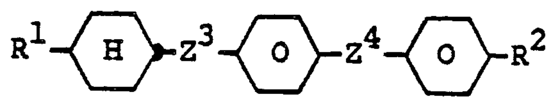

III

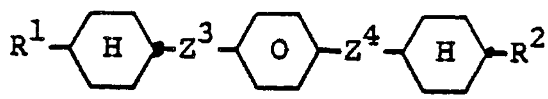

IV

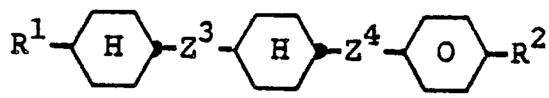

V

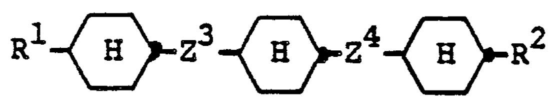

VI

où

$R^1$ et $R^2$ représentent chacun, indépendamment l'un de l'autre, un alkyle avec de 1 à 7 atomes de C, où aussi un ou deux groupes $CH_2$ non voisins peuvent être remplacés par —O—, —CO—, —O—CO—, —CO—O—, et/ou —CH=CH— (trans), et

$Z^3$ et $Z^4$ représentent chacun, indépendamment l'un de l'autre, —CO—O—, —O—CO—, —$CH_2CH_2$— ou une liaison simple, et/ou au moins un composant choisi dans le groupe D constitué par les composés de formules VII à XI

$$R^1\text{-}A^1\text{-}Z^1\text{-}A^2\text{-}A^3\text{-}Z^3\text{-}A^4\text{-}R^2 \qquad \text{VII}$$

$$R^1\text{-}A^1\text{-}Z^1\text{-}A^2\text{-}Z^2\text{-}A^3\text{-}A^4\text{-}R^2 \qquad \text{VIII}$$

$$R^1\text{-}A^1\text{-}Z^1\text{-}A^2\text{-}A^3\text{-}A^4\text{-}R^2 \qquad \text{IX}$$

$$R^1\text{-}A^1\text{-}A^2\text{-}Z^2\text{-}A^3\text{-}A^4\text{-}R^2 \qquad \text{X}$$

$$R^1\text{-}A^1\text{-}A^2\text{-}A^3\text{-}A^4\text{-}R^2 \qquad \text{XI}$$

où

$R^1$ et $R^2$ représentent chacun, indépendamment l'un de l'autre, un alkyle ayant de 1 à 7 atomes de C, où aussi un ou deux groupes $CH_2$ non voisins peuvent être remplacés par —O—, —CO—, —O—CO—, —CO—O—, et/ou —CH=CH— (trans),

$A^1$, $A^2$, $A^3$ et $A^4$ représentent chacun, indépendamment les uns des autres, un trans-1,4-cyclohexylène ou un 1,4-phénylène non substitué ou substitué par un ou deux atomes de F ou de Cl et/ou par des groupes $CH_3$ ou CN, et

$Z^1$, $Z^2$ et $Z^3$ représentent chacun, indépendamment les uns des autres, —CO—O—, —O—CO—, —$CH_2CH_2$—, —$CH_2O$—, —$OCH_2$— ou une liaison simple.

2. Elément d'affichage électrooptique selon la revendication 1, caractérisé en ce que le composant (A) de la phase à cristaux liquides comporte au moins un composé de formule (1),

$$R\text{—}(Q^1\text{—}Z')_n\text{—}Q^2\text{—}Z''\text{—}Q^A \qquad (1)$$

où

R représente un alkyle ayant de 2 à 9 atomes de C, où aussi un ou deux groupes $CH_2$ non voisins peuvent être remplacés par —O—, —CO—, —O—CO—, —CO—O—, et/ou —CH=CH— (trans),

Z' et Z'' représentent chacun —CO—O—, O—CO—, —$CH_2CH_2$—, —$CH_2O$—, —$OCH_2$— ou une liaison simple,

n est 0, 1 ou 2,

$Q^1$ et $Q^2$ représentent chacun, indépendamment l'un de l'autre, un trans-1,4-cyclohexylène, où aussi un ou deux groupes $CH_2$ non voisins peuvent être remplacés par —O—, et/ou —S—, ou un 1,4-phénylène, où aussi un ou plusieurs groupes CH peuvent être remplacés par N, et

$Q^A$ est un 3-halogéno-4-cyanophényle, un 3-halogéno-4-isothiocyanatophényle, un 3,4-dihalogénophényle, un p-nitrophényle, un trans-4-nitrocyclohexyle, un trans-4-isothiocyanatocyclohexyle ou un p-isothiocyanatophényle.

3. Elément d'affichage électrooptique selon la revendication 1, caractérisé en ce que la phase à cristaux liquides comporte au moins un composant choisi dans le groupe E, constitué par les composés de formules XII à XVII

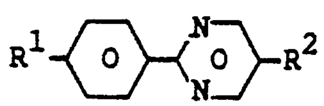

XII

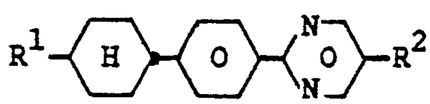

XIII

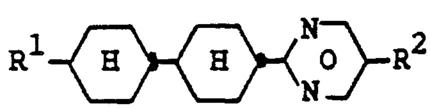

XIV

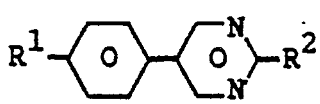

XV

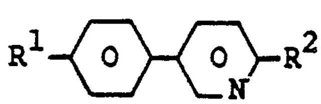

XVI

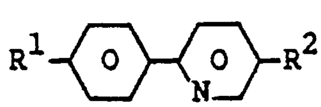

XVII

où

$R^1$ et $R^2$ représentent chacun, indépendamment l'un de l'autre, un alkyle ayant de 1 à 10 atomes de C, où aussi un ou deux groupes $CH_2$ non voisins peuvent être remplacés par —O—, —CO—, —O—CO—, —CO—O— et/ou —CH=CH— (trans).

4. Elément d'affichage électrooptique selon l'une quelconque des revendications 1 à 3, caractérisé en ce que, en plus des composants choisis dans les groupes A, B, C, D ou E, il comporte de 3 à 20% d'au moins un composant choisi dans le groupe F constitué par les composés de formules XVIII à XXV ayant une anisotropie diélectrique nettement positive ($\Delta\varepsilon > 5$)

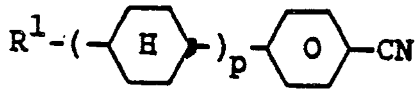

XVIII

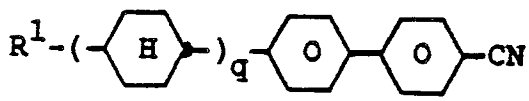

XIX

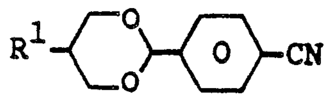

XX

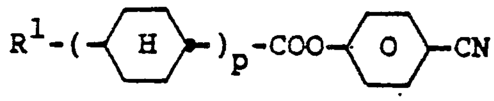

XXI

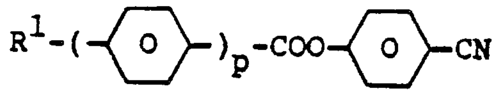

XXII

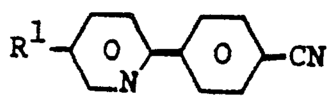

XXIII

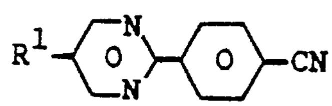

XXIV

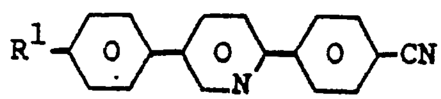

XXV

où

$R^1$ représente un alkyle ayant de 1 à 10 atomes de C, où aussi un ou deux groupes $CH_2$ non voisins peuvent être remplacés par —O—, —CO—, —O—CO—, —CO—O—, et/ou —CH=CH— (trans), et

p est 1 ou 2 et

q est 0, 1 ou 2.

5. Elément d'affichage électrooptique selon l'une quelconque des revendications 1 à 3, caractérisé en ce que, en plus des composants choisis dans les groupes A, B, C, D ou E, il comporte moins de 3% de composants ayant une anisotropie diélectrique positive $\Delta\varepsilon > 5$.

6. Elément d'affichage électrooptique selon l'une quelconque des revendications 1 à 3, caractérisé en ce que le composant A comporte un ou plusieurs composés des formules partielles suivantes:

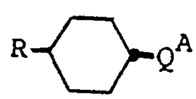

1d

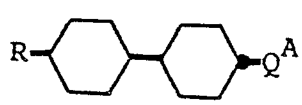

1e

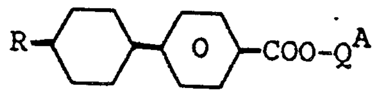

li

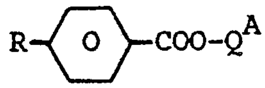

ll

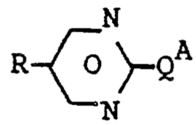

lo

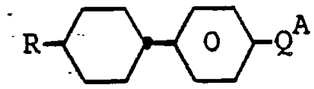

lt

7. Elément d'affichage électrooptique selon l'une quelconque des revendications 2 à 6, caractérisé en ce que le composant A comporte au moins un composé de formule (1), où n = 0, et en même temps au moins un composé de formule I, où n = 1.

8. Elément d'affichage électrooptique selon l'une quelconque des revendications 1 à 7, caractérisé en ce que la phase à cristaux liquides comporte au moins un composant à cristaux liquides non polaire choisi dans les composés des formules A à I:

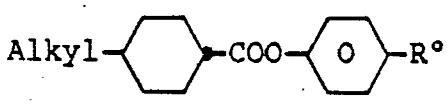

A

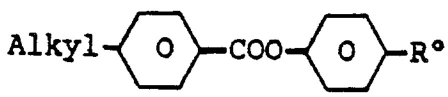

B

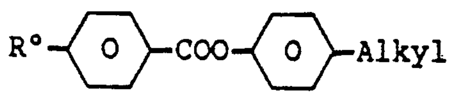

C

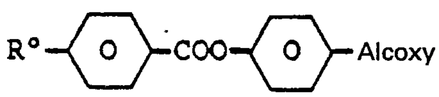

D

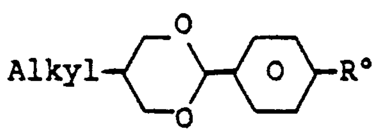

E

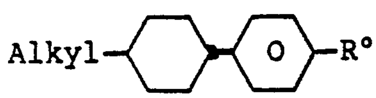

F

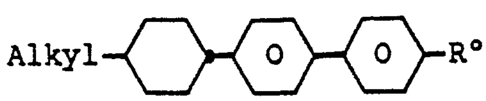

G

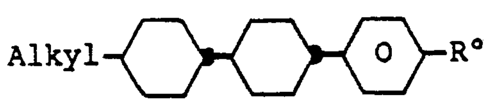

H

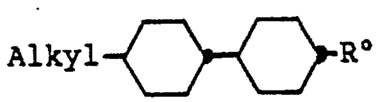

I

où l'alkyle ou l'alcoxy représentent chacun un groupe alkyle ou alcoxy à chaîne droite ayant de 1 à 7 atomes de C et R° représente un groupe alkyle ou alcoxy à chaîne droite ou un groupe oxaalkyle ou alkényle ayant de 1 à 7 atomes de C.

9. Elément d'affichage électrooptique selon la revendication 8, caractérisé en ce que la phase à cristaux liquides comporte au moins un composant de formule H et/ou I.

10. Phase à cristaux liquides selon l'une quelconque des revendications 1 à 9.

**Claims**

1. Electrooptical display element with a low temperature-dependence of the threshold voltage, characterized in that it contains a liquid crystal phase with at least one component (A) with a reduced degree of association, compounds with a reduced degree of association having to be understood here as those liquid crystal compounds which, with a similar overall dipole moment of the molecule (from vector addition of the individual dipole moments of the structural elements), exhibit a higher dielectric anisotropy by reduced antiparallel association of the molecule compounds than compounds such as 4-alkyl-4'-cyano-biphenyls or p-trans-4-alkylcyclohexyl-benzonitriles, at least one component chosen from group B, consisting of the compounds of the formula I and II

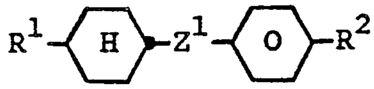

I

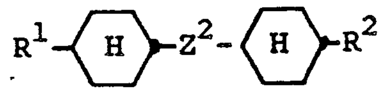

II

in which

$R^1$ and $R^2$ each independently of one another are alkyl with 1 to 7 C atoms, in which one or two non-adjacent $CH_2$ groups can also be replaced by —O—, —CO—, —O—CO—, —CO—O— and/or —CH=CH-(trans) and

$Z^1$ and $Z^2$ are each —CO—O—, —$CH_2$—O, —$CH_2CH_2$— or a single bond,

at least one component selected from group C consisting of the compounds of the formula III to VI

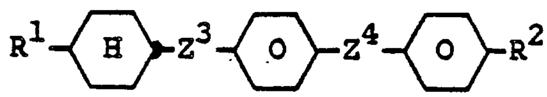

III

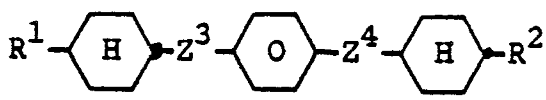

IV

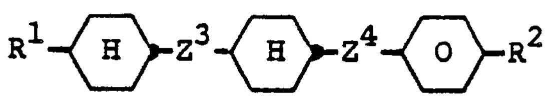

V

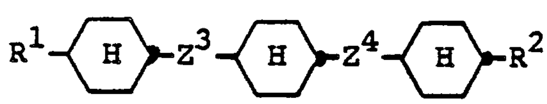

VI

in which

$R^1$ and $R^2$ each independently of one another are alkyl with 1 to 7 C atoms, in which one or two non-adjacent $CH_2$ groups can also be replaced by —O—, —CO—, —O—CO—, —CO—O— and/or —CH=CH-(trans), and

$Z^3$ and $Z^4$ each independently of one another are —CO—O—, —O—CO—, —$CH_2CH_2$— or a single bond,

and/or at least one component selected from the group D consisting of the compounds of the formulae VII to XI

$$R^1\text{-}A^1\text{-}Z^1\text{-}A^2\text{-}A^3\text{-}Z^3\text{-}A^4\text{-}R^2 \qquad \text{VII}$$

$$R^1\text{-}A^1\text{-}Z^1\text{-}A^2\text{-}Z^2\text{-}A^3\text{-}A^4\text{-}R^2 \qquad \text{VIII}$$

$$R^1\text{-}A^1\text{-}Z^1\text{-}A^2\text{-}A^3\text{-}A^4\text{-}R^2 \qquad \text{IX}$$

$$R^1\text{-}A^1\text{-}A^2\text{-}Z^2\text{-}A^3\text{-}A^4\text{-}R^2 \qquad \text{X}$$

$$R^1\text{-}A^1\text{-}A^2\text{-}A^3\text{-}A^4\text{-}R^2 \qquad \text{XI}$$

in which

$R^1$ and $R^2$ each independently of one another are alkyl with 1 to 7 C atoms, in which one or two non-adjacent $CH_2$ groups can also be replaced by —O—, —CO—, —O—CO—, —CO—O— and/or —CH=CH- (trans),

$A^1$, $A^2$, $A^3$ and $A^4$ each independently of one another are trans-1,4-cyclohexylene or 1,4-phenylene which is unsubstituted or substituted by one or two F or Cl atoms and/or $CH_3$ or CN groups,

$Z^1$, $Z^2$ and $Z^3$ each independently of one another are —CO—O—, —O—CO—, —$CH_2CH_2$—, —$CH_2O$—, —$OCH_2$— or a single bond.

2. Electrooptical display element according to Claim 1, characterized in that component (A) of the liquid crystal phase contains at least one compound of the formula (1)

$$R\text{—}(Q^1\text{—}Z')_n\text{—}Q^2\text{—}Z''\text{—}Q^A \qquad (1)$$

in which

R is alkyl with 2 to 9 C atoms, in which one or two non-adjacent $CH_2$ groups can also be replaced by —O—, —CO—, —O—CO—, —CO—O— and/or —CH=CH (trans),

Z' and Z'' are each —CO—O—, —O—CO—, —$CH_2CH_2$—, —$CH_2O$—, —$OCH_2$— or a single bond,

n is 0, 1 or 2,

$Q^1$ and $Q^2$ each independently of one another are trans-1,4-cyclohexylene, in which one or two non-adjacent $CH_2$ groups can also be replaced by —O— and/or —S—, or 1,4-phenylene, in which one or more CH groups can also be replaced by N, and

$Q^A$ is 3-halogeno-4-cyanophenyl, 3-halogeno-4-isothiocyanatophenyl, 3,4-dihalogenophenyl, p-nitrophenyl, trans-4-nitrocyclohexyl, trans-4-isothiocyanatocyclohexyl or p-isothiocyanatophenyl.

3. Electrooptical display element according to Claim 1, characterized in that the liquid crystal phase contains at least one component selected from group E, consisting of the compounds of the formulae XII to XVII

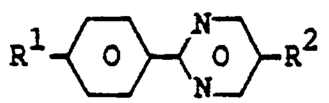

XII

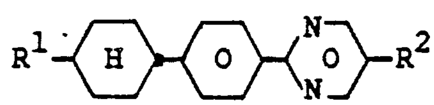

XIII

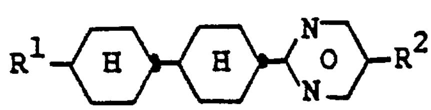

XIV

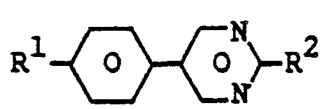

XV

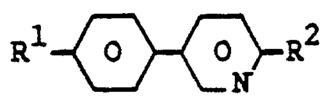

XVI

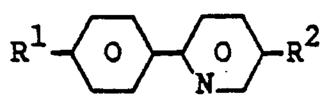

XVII

in which

$R^1$ and $R^2$ each independently of one another are alkyl with 1 to 10 C atoms, in which one or two non-

adjacent $CH_2$ groups can also be replaced by —O—, —CO—, —O—CO—, —CO—O— and/or —CH=CH-(trans).

4. Electrooptical display element according to any one of Claims 1 to 3, characterized in that it contains, alongside components selected from groups A, B, C, D and E, 3 to 20% of at least one component selected from group F, consisting of the compounds of the formulae XVIII to XXV with a significantly positive dielectric anisotropy ($\Delta\varepsilon > 5$)

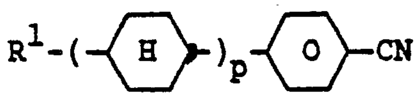 XVIII

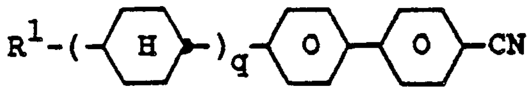 XIX

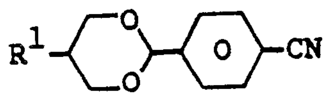 XX

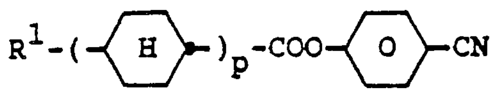 XXI

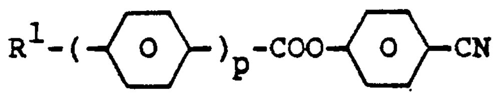 XXII

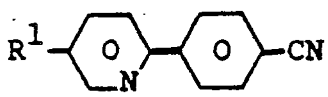 XXIII

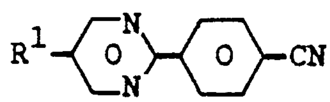 XXIV

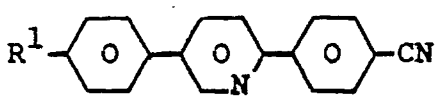 XXV

in which

$R^1$ is alkyl of 1 to 10 C atoms, in which one or two non-adjacent $CH_2$ groups can also be replaced by —O—, —CO—, —O—CO—, —CO—O— and/or —CH=CH-(trans), and

p is 1 or 2 and

q is 0, 1 or 2.

5. Electrooptical display element according to any one of Claims 1 to 3, characterized in that it contains, alongside components selected from groups A, B, C, D and E, less than 3% of components with a positive dielectric anisotropy ($\Delta\varepsilon > 5$).

6. Electrooptical display element according to at least one of Claims 1 to 3, characterized in that component A contains one or more compounds of the following part formulae:

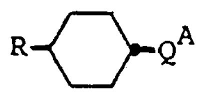 1d

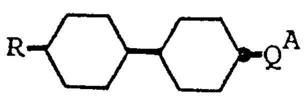 1e

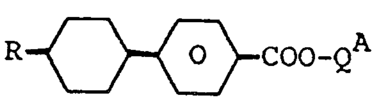 1i

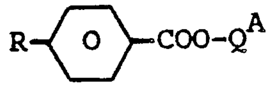

1l

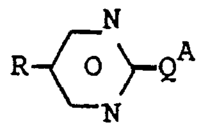

1o

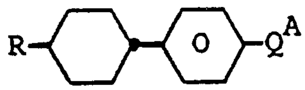

1t

7. Electrooptical display element according to one of Claims 2 to 6, characterized in that component A contains at least one compound of the formula (1), in which n is 0, and at the same time at least one compound of the formula (I) in which n is 1.

8. Electrooptical display element according to at least one of Claims 1 to 7, characterized in that the liquid crystal phase contains at least one non-polar liquid-crystalline component selected from the compounds of the formulae A to I:

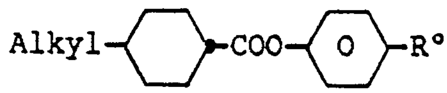

A

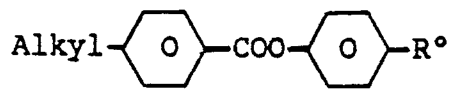

B

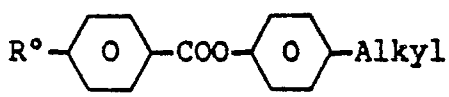

C

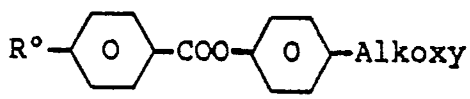

D

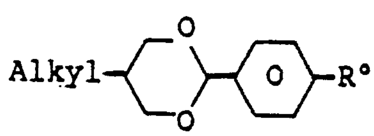

E

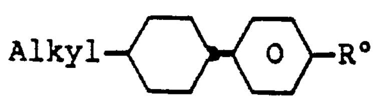

F

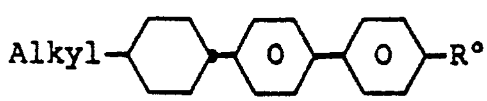

G

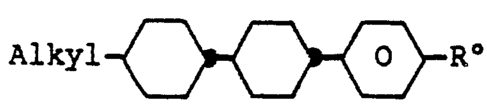

H

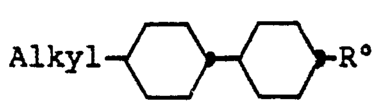

I

in which alkyl and alkoxy each are a straight-chain alkyl or alkoxy group with 1 to 7 C atoms and $R^o$ is a straight-chain alkyl or alkoxy group or an oxaalkyl or alkenyl group with 1 to 7 C atoms.

9. Electrooptical display element according to Claim 8, characterized in that the liquid crystal phase contains at least one component of the formula H and/or I.

10. Liquid crystal phase according to one of Claims 1 to 9.